# EUROPEAN PATENT APPLICATION

(11) **EP 4 075 767 A1**
(43) Date of publication of application: **19.10.2022**
(21) Application number: 20909197.4
(22) Date of filing: 14.09.2020
(51) Int. Cl.: H04M 1/02

(54) **ELECTRONIC DEVICE WITH ROLLABLE SCREEN**

(30) Priority: 31.12.2019 CN 201911423124
(71) Applicant: Huawei Technologies Co., Ltd., Longgang District Shenzhen, Guangdong 518129 (CN)
(72) Inventor: RAN, Jianbo, Shenzhen, Guangdong 518129 (CN); SHI, Wenming, Shenzhen, Guangdong 518129 (CN); ZHONG, Ding, Shenzhen, Guangdong 518129 (CN); WANG, Tao, Shenzhen, Guangdong 518129 (CN); ZOU, Lin, Shenzhen, Guangdong 518129 (CN)
(74) Representative: Gill Jennings & Every LLP
(86) International application number: PCT/CN2020/114992
(87) International publication number: WO 2021/135386

(57) **Abstract**

This application provides an electronic device with a rollable display. The electronic device includes a device body, the rollable display, and a support assembly. A display area is formed on at least one side surface of the device body. The device body has an initial display state, the device body can be enabled to extend to another extended display state, and an area of the display area in the initial display state is less than an area of the display area in the extended display state. The electronic device not only meets a normal use requirement of a user, but also increases a display area of a display screen, and supports the display screen with a larger display area.

## Description

This application claims priority to Chinese Patent Application No. 201911423124.X, filed with the China Intellectual Property Administration on December 31, 2019 and entitled "ELECTRONIC DEVICE WITH ROLLABLE DISPLAY", which is incorporated herein by reference in its entirety.

### TECHNICAL FIELD

This application relates to the field of electronic products, and in particular, to an electronic device with a rollable display.

### BACKGROUND

With continuous evolution and development of electronic devices such as a mobile phone and a tablet computer, a display screen of an electronic device is becoming larger. However, the larger display screen makes the electronic device inconvenient to carry

To resolve the foregoing problem, the electronic device may use a flexible display. Compared with a conventional rigid display, the flexible display has a flexible characteristic of being bendable. A specific solution is to roll the flexible display on a reel. When the flexible display is used, the flexible display is extended on the reel, to increase a display area of the flexible display. However, when the flexible display is rolled on the reel, an effective display screen of the flexible display is excessively small and cannot meet a normal use requirement of a user. In addition, after the flexible display is extended, a rear side of the flexible display is not supported, and the flexible display is easily bent. Another specific solution is to connect a rotating shaft to the flexible display, so that the flexible display can be folded in half to form a folded mobile phone. However, after the mobile phone is folded, a thickness of the entire mobile phone is increased.

### SUMMARY

This application provides an electronic device with a rollable display, to meet a normal use requirement of a user, increase a display area of a display screen, and support the display screen with a larger display area.

An embodiment of this application provides an electronic device with a rollable display, including a device body, the rollable display, and a support assembly. The device body includes a support shaft. The rollable display includes a first display part and a second display part that are arranged in a first direction. The second display part is rolled, and the second display part is wound around the support shaft.

A display area is formed on at least one side surface of the device body. The device body has an initial display state and an extended display state. In the initial display state, the first display part forms the display area. In the extended display state, the first display part and at least a part of the second display part form the display area. The support assembly is configured to support the display area in the extended display state. The support assembly is used to support the display area in the extended display state, to avoid that the display area is bent when the user performs an operation. Therefore, user experience can be improved.

In a possible implementation, according to the electronic device with a rollable display provided in this embodiment of this application, the device body includes a main support rack and a movable support rack that moves relative to the main support rack, the movable support rack is connected to the first display part, and the support shaft is located on the main support rack. The movable support rack drives the first display part to move, so that the movable support rack can be conveniently controlled, and the first display part can be prevented from being damaged.

In a possible implementation, according to the electronic device with a rollable display provided in this embodiment of this application, the device body includes a main support rack and a movable support rack that moves relative to the main support rack, the movable support rack is connected to the second display part, and the support shaft is located on the movable support rack. The movable support rack drives the second display part to move, so that the movable support rack can be conveniently controlled, and the first display part can be prevented from being damaged.

In a possible implementation, the electronic device with a rollable display provided in this embodiment of this application further includes a sliding assembly. The sliding assembly includes a first fastener and a sliding part that slides relative to the first fastener. The first fastener is connected to the main support rack, and the sliding part is connected to the first display part. The sliding part is disposed, so that the first display part can be manually driven to move. Therefore, a structure is simple, an operation is convenient, and costs are reduced.

In a possible implementation, the electronic device with a rollable display provided in this embodiment of this application further includes at least one driving assembly. The driving assembly is configured to drive the movable support rack to move, to enable the device body to extend from the initial display state to another extended display state. The first display part may be automatically driven to move, and transmission is stable. This facilitates control of driving force that drives the first display part to move, and does not easily cause damage to the first display part.

In a possible implementation, according to the electronic device with a rollable display provided in this embodiment of this application, the driving assembly includes a first driving part, and the first driving part is a linear driving part.

In a possible implementation, according to the electronic device with a rollable display provided in this embodiment of this application, the driving assembly includes a first driving part and a transmission assembly connected to the first driving part. The transmission assembly includes a rotating part and a first moving part that matches the rotating part. The first driving part is connected to the rotating part and drives the rotating part to rotate, so that the rotating part drives the first moving part to move. The first moving part is connected to the movable support rack.

In a possible implementation, according to the electronic device with a rollable display provided in this embodiment of this application, the support assembly is configured to support the first display part and/or the second display part that are/is located outside the main support rack.

In a possible implementation, according to the electronic device with a rollable display provided in this embodiment of this application, the support assembly is located in the main support rack. The support assembly includes a second fastener and a second moving part. The second fastener and the second moving part cooperate to support a rear surface of the first display part. The second fastener is connected to the main support rack, the second moving part is connected to the first display part, and/or the second moving part is connected to the second display part. In the extended display state, the second moving part supports the first display part and/or the second display part that are/is located outside the main support rack.

In a possible implementation, according to the electronic device with a rollable display provided in this embodiment of this application, in the extended display state, a part of the second moving part is located in the main support rack.

In a possible implementation, according to the electronic device with a rollable display provided in this embodiment of this application, the second moving part is a retractable support board.

In a possible implementation, according to the electronic device with a rollable display provided in this embodiment of this application, the support assembly includes a second driving part and a support part connected to the second driving part. The second driving part drives the support part to extend to an outer side of the main support rack, to support the second display part located on the outer side of the main support rack.

In a possible implementation, the electronic device with a rollable display provided in this embodiment of this application further includes at least one connection assembly. The second display part is connected to the main support rack by using the connection assembly.

In a possible implementation, according to the electronic device with a curled screen provided in this embodiment of this application, the connection assembly includes a rotating shaft and a reinforcement film wound on the rotating shaft. A first side of the reinforcement film is fastened to the rotating shaft, and a second side of the reinforcement film is connected to the second display part. Tensile force is jointly provided for the second display part by using driving force for moving the first display part and supporting force exerted by the rotating shaft on the reinforcement film, so that the second display part remains flat, and arching that occurs when the second display part is repeatedly rolled is reduced.

In a possible implementation, according to the electronic device with a rollable display provided in this embodiment of this application, the reinforcement film is connected to a rear surface of the second display part.

In a possible implementation, according to the electronic device with a rollable display provided in this embodiment of this application, the connection assembly includes an installation part and at least one connector. A first end of the connector is connected to the main support rack, a second end of the connector is connected to the installation part, and the installation part is connected to the second display part.

In a possible implementation, according to the electronic device with a rollable display provided in this embodiment of this application, a distance between an axis of the support shaft and a display surface of the first display part is equal to a distance between the axis of the support shaft and a display surface of the second display part.

In a possible implementation, the electronic device with a rollable display provided in this embodiment of this application further includes at least one locking assembly. The locking assembly is configured to fasten the first display part and/or the second display part in the extended display state. The locking assembly is configured to fasten the first display part in the initial display state and in the extended display state, to maintain a relative position between the first display part and the main support rack and prevent the first display part from moving.

In a possible implementation, according to the electronic device with a rollable display provided in this embodiment of this application, the locking assembly includes a support base, a stopper, and at least two springs. The support base has a slide rail, and the stopper is located on the slide rail. The stopper is capable of moving in an extension direction of the slide rail. The springs are connected to the support base, and a part of the springs extend into the slide rail.

An embodiment of this application provides an electronic device with a rollable display, including a device body, the rollable display, and a support assembly. An area of a display area of the mobile phone in the extended display state is greater than an area of a display area of the mobile phone in the initial display state. In this way, in the initial display state, a normal use requirement of a user can be met. In the extended display state, an area of the display area is increased in comparison with an area of the display area in the initial display state. In this way, a requirement of the user for a large screen is met. In addition, the support assembly is used to support the display area in the extended display state, to avoid that the display area is bent when the user performs an operation. Therefore, user experience can be improved.

### BRIEF DESCRIPTION OF DRAWINGS

FIG. 1 is a schematic diagram of a structure of a first type of an electronic device in the conventional technology;
FIG. 2 is a schematic diagram of a structure of a first type of an electronic device in an extended state in the conventional technology;
FIG. 3 is a schematic diagram of a structure of a second type of an electronic device in the conventional technology;
FIG. 4 is a schematic diagram of a structure of a second type of an electronic device in an extended state in the conventional technology;
FIG. 5 is a schematic diagram of a structure of an electronic device with a rollable display according to an embodiment of this application;
FIG. 6 is a bottom view of an electronic device with a rollable display according to an embodiment of this application;
FIG. 7 is a first cross-sectional schematic view of an A-A cross section in FIG. 5;
FIG. 8 is a schematic diagram of a structure of an electronic device with a rollable display in an extended display state according to an embodiment of this application;
FIG. 9 is a bottom view of an electronic device with a rollable display in an extended display state according to an embodiment of this application;
FIG. 10 is a cross-sectional schematic view of a B-B cross section in FIG. 8;
FIG. 11 is a schematic diagram of a position of a sliding assembly in an electronic device with a rollable display according to an embodiment of this application;
FIG. 12 is a schematic diagram of a position of a sliding assembly in another direction in an electronic device with a rollable display according to an embodiment of this application;
FIG. 13 is a schematic diagram of a position of a driving assembly in a state in an electronic device with a rollable display according to an embodiment of this application;
FIG. 14 is a schematic diagram of a structure of a driving assembly in an electronic device with a rollable display according to an embodiment of this application;
FIG. 15 is a schematic diagram of a position of a driving assembly in another state in an electronic device with a rollable display according to an embodiment of this application;
FIG. 16 is a schematic diagram of a position of a second display part of an electronic device with a rollable display according to an embodiment of this application;
FIG. 17 is a second cross-sectional schematic view of an A-A cross section in FIG. 5;
FIG. 18 is a third cross-sectional schematic view of an A-A cross section in FIG. 5;
FIG. 19 is a schematic diagram of a structure of a connection assembly in an electronic device with a rollable display according to an embodiment of this application;
FIG. 20 is a schematic diagram of a position of a connection assembly in a state in an electronic device with a rollable display according to an embodiment of this application;
FIG. 21 is a schematic diagram of a structure of a support assembly in an electronic device with a rollable display according to an embodiment of this application;
FIG. 22 is a schematic diagram of a position of a support assembly in an extended state in an electronic device with a rollable display according to an embodiment of this application;
FIG. 23 is a schematic diagram of a structure of a support assembly in an electronic device with a rollable display according to an embodiment of this application;
FIG. 24 is an enlarged schematic diagram of a position C in FIG. 23;
FIG. 25 is a schematic diagram of a position of a locking assembly in an electronic device with a rollable display according to an embodiment of this application;
FIG. 26 is an enlarged schematic diagram of a position D in FIG. 25;
FIG. 27 is a schematic diagram of a structure of a locking assembly in an electronic device with a rollable display according to an embodiment of this application;
FIG. 28 is a cross-sectional schematic view of an E-E cross section in FIG. 27;
FIG. 29 is a schematic diagram of a structure of an electronic device with a rollable display according to an embodiment of this application;
FIG. 30 is a bottom view of an electronic device with a rollable display according to an embodiment of this application;
FIG. 31 is a schematic diagram of a structure of an electronic device with a rollable display in an extended display state according to an embodiment of this application;
FIG. 32 is a bottom view of an electronic device with a rollable display in an extended display state according to an embodiment of this application;
FIG. 33 is a first cross-sectional schematic view of an F-F cross section in FIG. 31;
FIG. 34 is a second cross-sectional schematic view of an F-F cross section in FIG. 31;
FIG. 35 is a schematic diagram of a structure of an electronic device with a rollable display according to an embodiment of this application;
FIG. 36 is a cross-sectional schematic view of a G-G cross section in FIG. 35;
FIG. 37 is a schematic diagram of a structure of an electronic device with a rollable display in an extended display state according to an embodiment of this application; and
FIG. 38 is a cross-sectional schematic view of an H-H cross section in FIG. 37.

### Reference numerals:

100, 200, and 300: mobile phone;
101: housing; 102: first reel; 103: second reel; 104 and 201: flexible display; 105: support film; 106: push-pull part; 107: opening;
202: rotation shaft; 203: support housing;
30: device body; 301: main support rack; 302: movable support rack; 303: accommodation cavity; 304: protective cover; 305: support shaft; 306: middle frame; 3061: middle plate; 3062: frame; 307: rear cover; 3071: first rear cover; 3072: second rear cover; 308: first channel; 309: second channel; 310: reinforcement film; 311: rotating shaft; 312: installation part; 3121: connecting point; 313: connector; 314: rail; 315: entrance;
40: rollable display; 401: first display part; 4011: first side edge; 4012: second side edge; 4013: third side edge; 402: second display part;
50: sliding assembly; 501: first fastener; 502: sliding part; 503: ball;
60: driving assembly; 601: first driving part; 602: transmission assembly; 6021: rotating part; 6022: first moving part;
70: support assembly; 701: second fastener; 7011: first concave area; 7012: first convex area; 702: second moving part; 7021: second concave area; 7022: second convex area; 7023: support area; 7024: retractable area; 703: second driving part; 704: support part;
80: locking assembly; 801: support base; 8011: slide rail; 8012: spring fastening rack; 80121: installation slot; 802: stopper; 8021: guiding area; 8022: threaded hole; 803: spring; 8031: pressing area; and 8032: fixing area.

### DESCRIPTION OF EMBODIMENTS

An embodiment of this application provides an electronic device with a rollable display. The electronic device may be another electronic device with a display screen, such as a mobile phone, a notebook computer, an ultra-mobile personal computer (ultra-mobile personal computer, UMPC), a netbook, a personal digital assistant (personal digital assistant, PDA), a wearable device, a virtual reality device, or a mobile computing device. This is not limited in this embodiment of this application. For ease of description, this application is described by using an electronic device as a mobile phone.

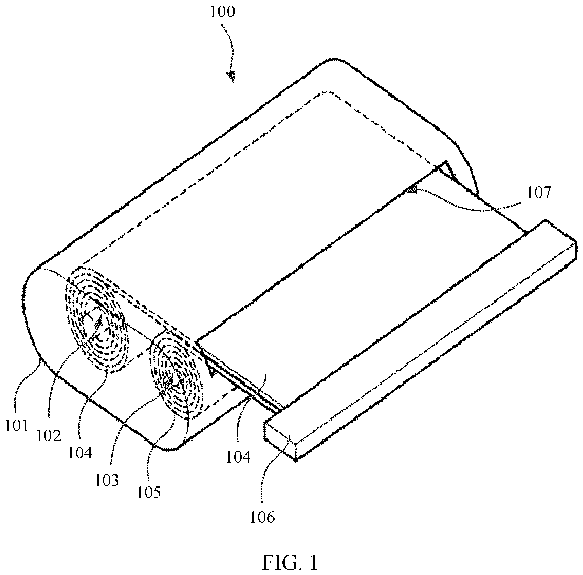

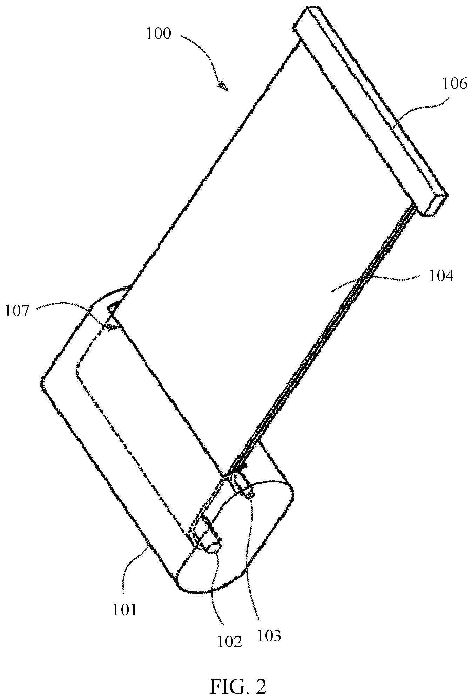

With development of electronic devices such as a mobile phone and a tablet computer, a user imposes higher requirements on portability of the electronic device and display of a larger display screen. FIG. 1 is a schematic diagram of a structure of a first type of an electronic device in the conventional technology. FIG. 2 is a schematic diagram of a structure of a first type of an electronic device in an extended state in the conventional technology. FIG. 1 and FIG. 2 show a mobile phone 100 with a flexible display. The mobile phone 100 includes a housing 101, a first reel 102 and a second reel 103 that are located in the housing 101, a flexible display 104 that is rolled on the first reel 102, and a support film 105 that is rolled on the second reel 103. The housing 101 has an opening 107, the support film 105 is located on a rear surface of the flexible display 104, and the flexible display 104 and the support film 105 extend out of the housing 101 through the opening 107. In addition, the flexible display 104 that is located outside the housing 101 and an end of the support film 105 are connected to a push-pull part 106. When the mobile phone 100 is in a rolled state, the mobile phone 100 may be used as a wearable device, and the push-pull part 106 presses against the opening 107. In this way, it is easy for a user to carry. In this case, the flexible display 104 and the support film 105 are located in the housing 101, and the housing 101 may be partially transparent, so that a display area of the flexible display 104 between the push-pull part 106 and the first reel 102 can normally display.

When the user uses the mobile phone 100, the push-pull part 106 is pulled, and the flexible display 104 and the support film 105 are separately extended from the first reel 102 and the second reel 103 and extend out of the housing 101. Therefore, a display area of the mobile phone 100 is increased. However, the support film 105 that can be rolled on the second reel 103 has a limited support strength, and it is difficult for the mobile phone 100 to perform a touch operation. Therefore, user experience is affected. In addition, when the mobile phone 100 is in the rolled state, an effective display screen of the flexible display 104 is excessively small to meet a normal use requirement of a user.

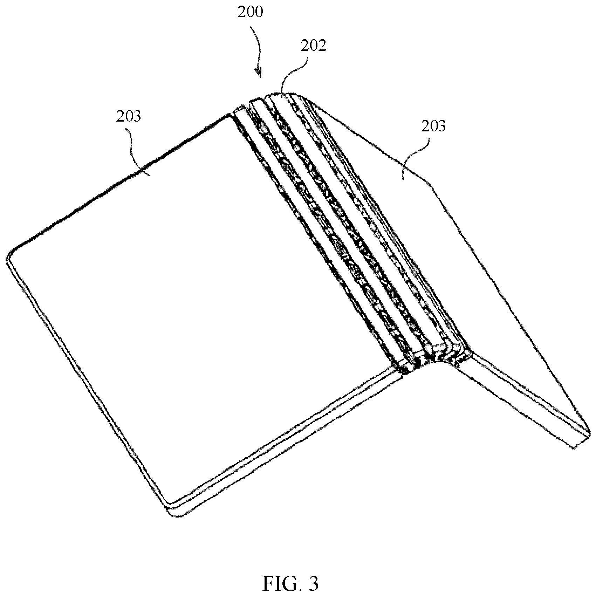

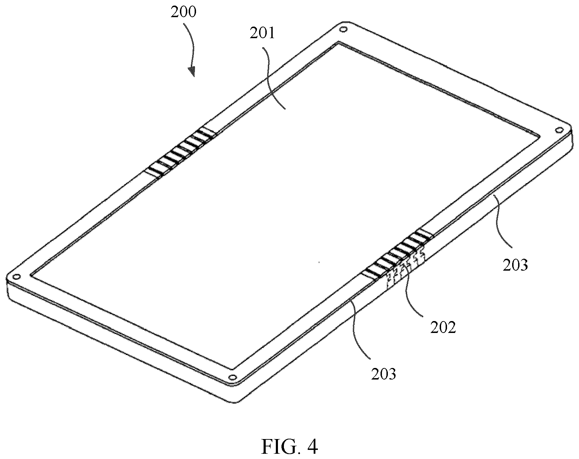

FIG. 3 is a schematic diagram of a structure of a second type of an electronic device in the conventional technology. FIG. 4 is a schematic diagram of a structure of a second type of an electronic device in an extended state in the conventional technology. FIG. 3 and FIG. 4 show another mobile phone 200 with a flexible display. The mobile phone 200 includes a flexible display 201, a rotation shaft 202, and two support housings 203 for supporting the flexible display 201. The two support housings 203 are connected by using the rotation shaft 202. When the mobile phone 200 is folded, the two support housings 203 are attached, and a display area of the flexible display 201 is half of an entire area of the flexible display 201. This meets a normal use requirement of a user and is easy to carry Alternatively, the flexible display 201 is folded to overlap. When the flexible display 201 is used, the flexible display 201 needs to be opened by using the two support housings 203, to expose the display area of the flexible display 201. In this way, a size of the mobile phone 200 is reduced, and the flexible display 201 is prevented from being scratched while the mobile phone 200 is easy to carry. When the display area of the mobile phone 100 needs to be increased, the two support housings 203 are held, so that the support housings 203 rotate around the rotation shaft 202, and the flexible display 201 is extended. However, when the flexible display 201 is folded, an overall thickness of the mobile phone 200 is 1.5 to 2 times a thickness of an existing mobile phone. In addition, when the rotation shaft 202 is added, an overall weight of the mobile phone 200 increases, and an overall sense of holding and portability of the mobile phone 200 are poor. A bending position of the flexible display 201 is bent for a long time, and a crease may exist. Therefore, surface fineness of the flexible display 201 is reduced, and user experience is affected.

To resolve the foregoing problem, an embodiment of this application provides a mobile phone 300, including a device body 30, a rollable display 40, and a support assembly 70. At least one side surface of the device body 30 forms a display area. The device body 30 has an initial display state. The device body 30 can be enabled to extend to another extended display state. An area of the display area in the initial display state is less than an area of the display area in the extended display state. The support assembly 70 is configured to support the display area in the extended display state. The device body 30 may be manually enabled to extend to another extended display state, or may be automatically enabled to extend to another extended display state. A specific enabling manner is described in detail in the following embodiment.

Specifically, the rollable display 40 includes a first display part 401 and a second display part 402 that are arranged in a first direction. In the initial display state, the first display part 401 of the rollable display 40 forms the display area of the device body 30, and the second display part 402 is rolled. When the device body 30 is enabled to extend, the second display part 402 is expanded accordingly, so that when the device body 30 enters the extended display state, the first display part 401 and at least a part of the second display part 402 together form the display area. In other words, an area of the display area in the initial display state is less than an area of the display area in the extended display state. The first direction may be an extension direction in which the device body 30 is enabled to extend.

In the initial display state, the display area formed by the first display part 401 can meet a normal use requirement of a user. A length of a diagonal line of the display area formed by the first display part 401 may be 5 inches, 5.2 inches, or the like. In other words, a size of a home screen of the mobile phone 300 is 5 inches, 5.2 inches, or the like. In the extended display state, the first display part 401 and at least a part of the second display part 402 together form the display area. The display area has a larger area than that of the display area formed only by the first display part 401 in the initial display state.

To facilitate installation of the second display part 402, the device body 30 includes a support shaft 305, and the second display part 402 is wound around the support shaft 305. A distance between an axis of the support shaft 305 and a display surface of the first display part 401 is equal to a distance between the axis of the support shaft 305 and a display surface of the second display part 402. In this way, when the mobile phone 300 is in the extended display state, the second display part 402 and the first display part 401 are located in a same plane. Therefore, user experience can be improved.

The mobile phone 300 provided in this embodiment of this application includes a device body 30, the rollable display 40, and a support assembly 70. When the mobile phone 300 is in the initial display state, a normal use requirement of a user can be met. In the extended display state, an area of the display area is greater than an area of the display area in the initial display state. In this way, the area of the display area is increased, and a requirement of the user for a large screen is met. In addition, the support assembly is used to support the display area in the extended display state, to avoid that the display area is bent when the user performs an operation. Therefore, user experience can be improved.

In this embodiment of this application, to increase a display area of the mobile phone 300, the rollable display 40 in the mobile phone 300 may move toward different sides of the mobile phone 300. In this embodiment of this application, a scenario in which the rollable display in the mobile phone 300 moves toward a first side of the mobile phone 300 is set as a scenario 1. A scenario in which the rollable display in the mobile phone 300 moves toward a second side of the mobile phone 300 is set as a scenario 2. A scenario in which the rollable display 40 in the mobile phone 300 moves toward two opposite sides of the mobile phone 300 is set as a scenario 3.

The following separately describes a structure of the mobile phone 300 in the scenario 1, the scenario 2, and the scenario 3.

### Scenario 1

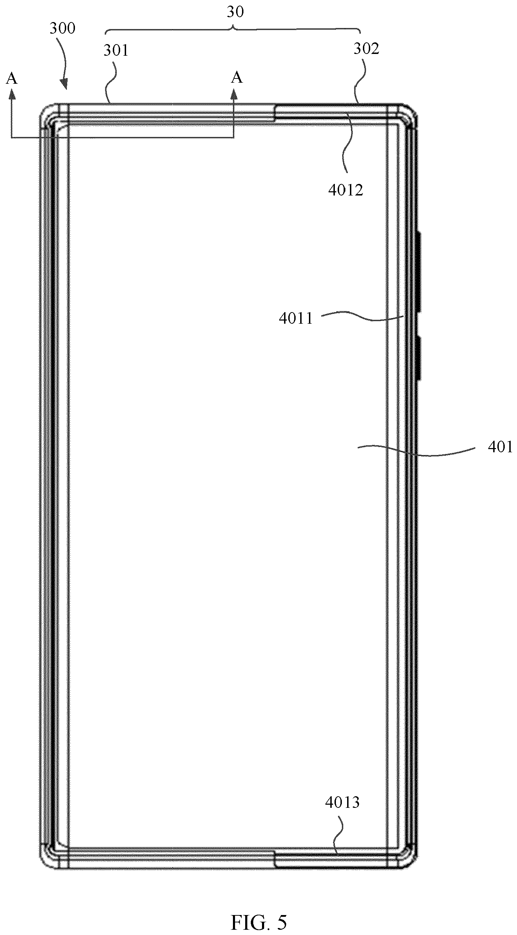

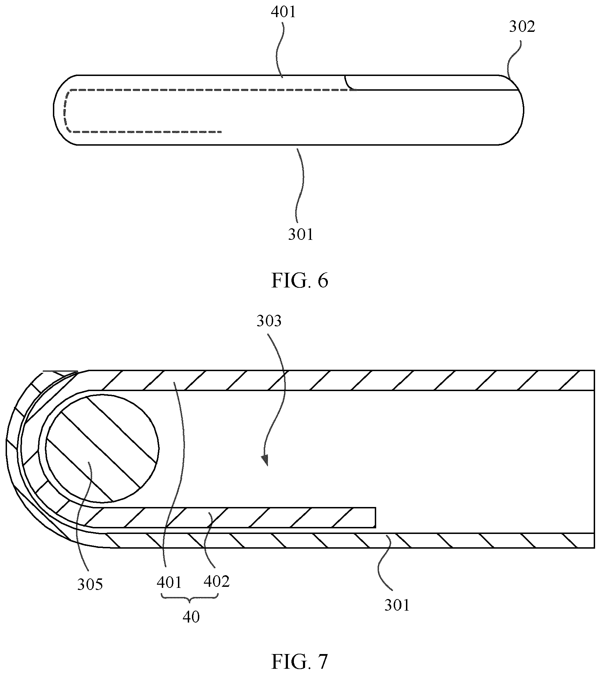

FIG. 5 is a schematic diagram of a structure of an electronic device with a rollable display according to an embodiment of this application. FIG. 6 is a bottom view of an electronic device with a rollable display according to an embodiment of this application. FIG. 7 is a cross-sectional schematic view of a cross section A-A in FIG. 5. FIG. 5 to FIG. 7 show initial display statuses of the mobile phone 300. Refer to FIG. 5 to FIG. 7. The mobile phone 300 provided in an embodiment of this application includes the device body 30 and the rollable display 40. The rollable display 40 includes the first display part 401 and the second display part 402 that are arranged in a first direction, and the second display part 402 is rolled on the support shaft 305. The device body 30 includes a main support rack 301 and a movable support rack 302 that can move relative to the main support rack 301. The movable support rack 302 is connected to the first display part 401, and the support shaft 305 is located on the main support rack 301.

The device body 30 may be a mobile phone body, and the mobile phone body may further include components that can implement functions of the mobile phone, such as a battery and a circuit board that are located in the main support rack 301. The mobile phone body is not limited in this embodiment.

When the mobile phone 300 is in the initial display state, the second display part 402 rolls on the support shaft 305, and the first display part 401 forms a display area, to meet a normal use requirement of a user. The second display part 402 may be located in the main support rack 301. For example, the first display part 401 and the main support rack 301 enclose an accommodation cavity 303, the second display part 402 is rolled on the support shaft 305, and the second display part 402 and the support shaft 305 are located in the accommodation cavity 303. Alternatively, the second display part 402 may be located outside the device body 30. For example, the second display part 402 is located on a side surface, a front surface, or a rear surface opposite to the front surface of the main support rack 301. The front surface of the main support rack 301 is a display surface of the first display part 401.

It should be noted that the rollable display 40 may be an entire screen, and the first display part 401 and the second display part 402 are used to distinguish between different display areas of the rollable display 40. Alternatively, the rollable display 40 may be a screen formed by splicing the first display part 401 and the second display part 402. This is not limited in this embodiment.

The movable support rack 302 may be an edge wrap of a side edge that is of the first display part 401 and that can be moved out of the main support rack 301. The edge wrap may cover at least a part of a first side edge 4011 of the first display part 401. The first side edge 4011 is a side edge that is of the first display part 401, that can be moved out of the main support rack 301, and that is perpendicular to a movement direction of the first display part 401. The edge wrap may also wrap the first side edge 4011 and a part of a second side edge 4012 of the first display part 401. The edge wrap may wrap the first side edge 4011 and a part of a third side edge 4013 of the first display part 401. Alternatively, the edge wrap may wrap the first side edge 4011, a part of the second side edge 4012, and a part of the third side edge 4013 of the first display part 401. The second side edge 4012 and the third side edge 4013 are respectively located on two sides of the first side edge 4011. When the mobile phone 300 is in the initial display state, an edge of the movable support rack 302 is flush with an edge of the main support rack 301. In this way, an appearance of the mobile phone 300 is beautiful.

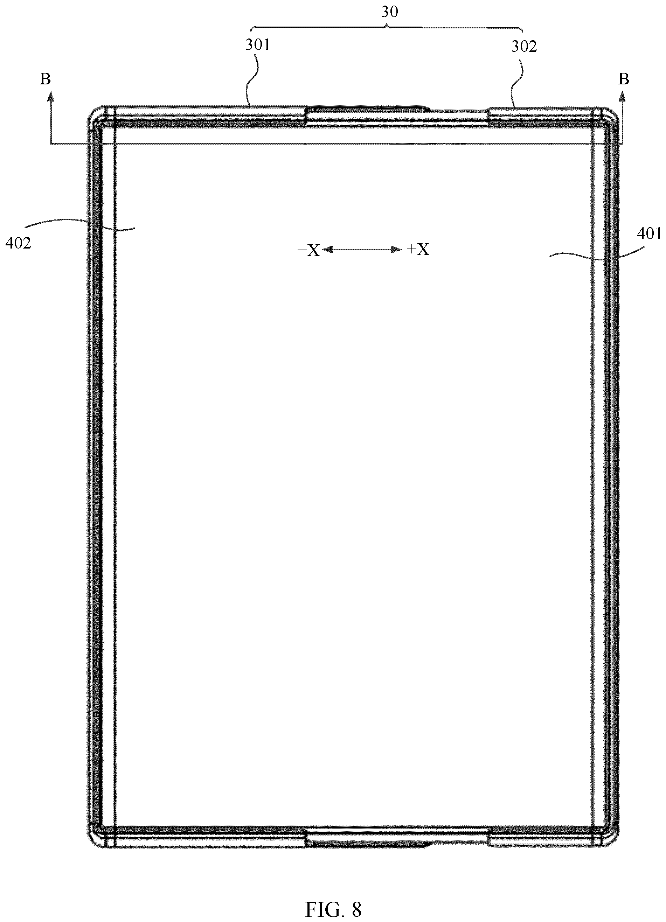

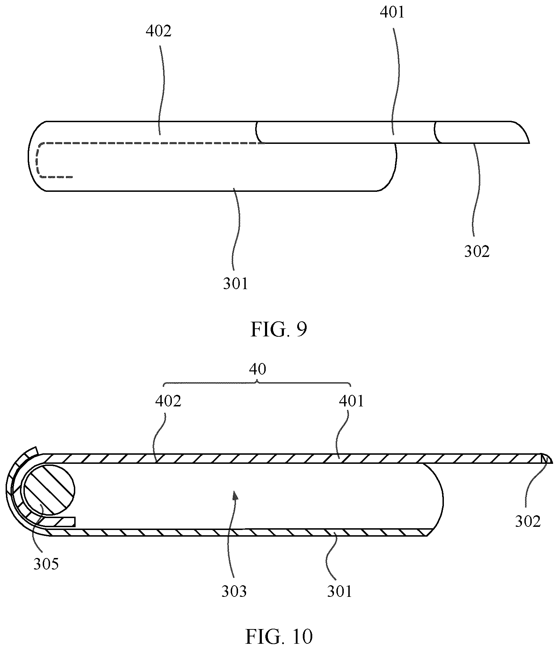

FIG. 8 is a schematic diagram of a structure of an electronic device with a rollable display in an extended display state according to an embodiment of this application. FIG. 9 is a bottom view of an electronic device with a rollable display in an extended display state according to an embodiment of this application. FIG. 10 is a cross-sectional schematic view of a B-B cross section in FIG. 8. FIG. 8 to FIG. 10 show extended display statuses of the mobile phone 300. Refer to FIG. 8 to FIG. 10. The movable support rack 302 may move toward a first side of the main support rack 301, to drive the first display part 401 to move toward the first side of the main support rack 301, that is, drive the first display part 401 to move toward a direction +X in FIG. 8, and drive the second display part 402 to move by using the first display part 401, so that at least a part of the second display part 402 is extended or is extended out of the accommodation cavity 303. In this case, some or all parts of the first display part 401 are moved to an outer side of the main support rack 301, so that the mobile phone 300 is in the extended display state. In this way, the first display part 401 and the extended second display part 402 jointly form the display area, so that the display area of the mobile phone 300 is increased, and a user requirement for a large display area of the mobile phone 300 is met without increasing an overall thickness of the mobile phone 300.

The movable support rack 302 may move toward a second side of the main support rack 301. The first side of the main support rack 301 is opposite to the second side of the main support rack 301. To be specific, the movable support rack 302 drives the first display part 401 to move in a direction -X in FIG. 8, and the first display part 401 drives the second display part 402 to move, so that at least a part of the second display part 402 is rolled and extends into the accommodation cavity 303. The first display part 401 is moved to the main support rack 301, so that the mobile phone 300 is in the initial display state shown in FIG. 5, and the first display part 401 is used as the display area. In this way, a normal display requirement of the user for the screen of the mobile phone 300 is met, an area of a display area of the mobile phone is reduced, and the mobile phone 300 is easy to carry

It may be understood that, to facilitate movement of the movable support rack 302, a chute or a slide rail is disposed on the main support rack 301. An extension direction of the chute or the slide rail is parallel to a movement direction of the movable support rack 302, that is, an extension direction of the chute or the slide rail is disposed in the +X or -X direction in FIG. 8. An end part of the first display part 401 is located in the chute, or the first display part 401 is located on the slide rail. The chute or the slide rail is disposed to guide the movement of the first display part 401, so that the first display part 401 can move smoothly.

In this embodiment of this application, the movable support rack 302 drives the first display part 401 to move, so that the first display part 401 moves along with the second display part 402. The movable support rack 302 may be manually or automatically enabled to move. The following provides descriptions with reference to a specific implementation.

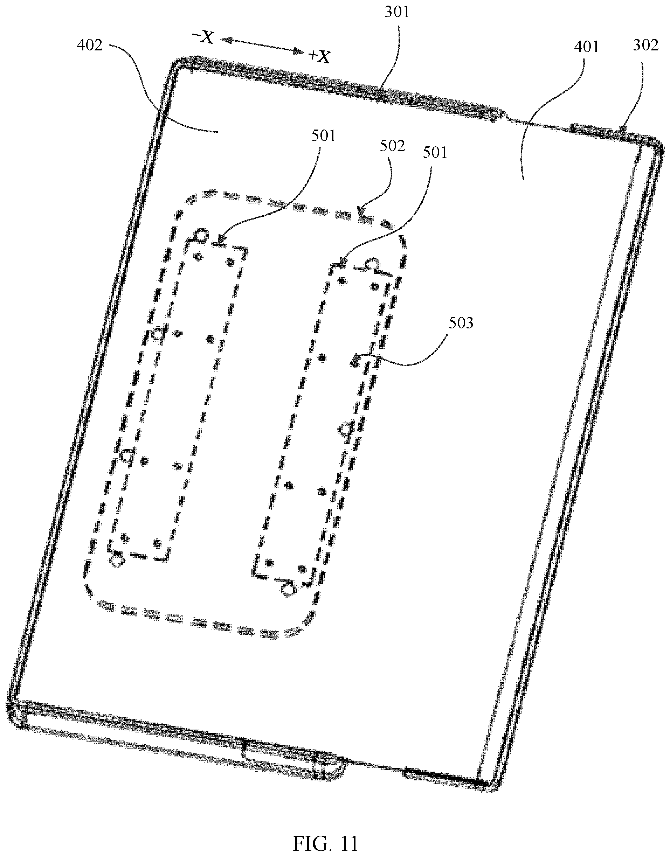

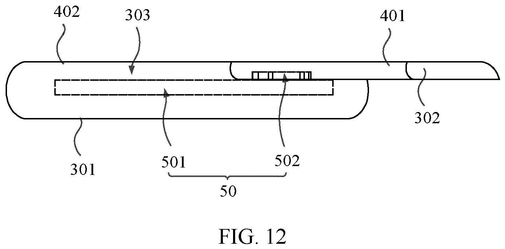

FIG. 11 is a schematic diagram of a position of a sliding assembly in an electronic device with a rollable display according to an embodiment of this application. FIG. 12 is a schematic diagram of a position of a sliding assembly in another direction in an electronic device with a rollable display according to an embodiment of this application. FIG. 11 and FIG. 12 show a manner of manually moving the movable support rack 302. Refer to FIG. 11 and FIG. 12. In this embodiment, the mobile phone 300 further includes a sliding assembly 50. The sliding assembly 50 may be a bistable slide rail mechanism. The bistable mechanism means that there are two stable balanced states in a movement process of the mechanism. The bistable mechanism enables the movable support rack 302 to move out of the main support rack 301, which is a stable balanced state. The bistable mechanism enables the first display part 401 to be located on the movable support rack 302, which is another stable balance state. In a possible implementation, the sliding assembly 50 includes a first fastener 501 and a sliding part 502 that slides relative to the first fastener 501. The first fastener 501 is connected to the main support rack 301, and the sliding part 502 is connected to the movable support rack 302.

Specifically, the first fastener 501 may be a flat plate, the flat plate is fastened in the accommodation cavity 303, and a plane is parallel to the first display part 401. The sliding part 502 may be a sliding plate or a sliding slice that is parallel to the flat plate. The sliding part 502 is connected to the movable support rack 302, and a slide rail is provided on the flat plate. An extension direction of the slide rail is the same as a movement direction of the first display part 401. The sliding plate or a surface that is of the sliding slice and that faces the slide rail is provided with a slider. The slider is connected to the slide rail, and the slider moves along the slide rail, so that the movable support rack 302 connected to the sliding part 502 moves in an extension direction of sliding. It may be understood that positions of the slide rail and the slider may be interchanged, that is, the slide rail is disposed on the sliding part 502, and the slider is disposed on the first fastener 501.

When the movable support rack 302 needs to be moved to increase the display area of the mobile phone 300, the user manually applies force to push the display surface of the first display part 401 toward a +X direction in FIG. 11. The first display part 401 drives the sliding part 502 to move along the first fastener 501 by using the movable support rack 302, so that the first display part 401 can smoothly move out of the main support rack 301, to enable the mobile phone 300 to be in the initial display state shown in FIG. 5. The display surface of the first display part 401 is pushed in a direction of -X in FIG. 11, and the first display part 401 drives the sliding part 502 to move along the first fastener 501, so that the first display part 401 returns to the main support rack 301, to enable the mobile phone 300 to be in the extended display state shown in FIG. 8. The foregoing manner of manually moving the movable support rack 302 is simple in structure and convenient in operation.

It may be understood that two sliding parts 502 in FIG. 11 respectively show position changes of the sliding parts 502 when the first display part 401 is in different positions. The sliding part 502 on a side in the -X direction in FIG. 11 shows a position of the sliding part 502 when the first display part 401 is moved to the main support rack 301, that is, when the mobile phone 300 is in the initial display state. The sliding part 502 on the side in the +X direction in FIG. 11 shows a position of the sliding part 502 when the first display part 401 is moved out of the main support rack 301, that is, when the mobile phone 300 is in the extended display state.

To enable the sliding part 502 to slide smoothly, at least two slide rails are disposed. A position of the slide rail is not limited, provided that an extension direction of the slide rail is the same as the movement direction of the first display part 401. For example, the slide rail may be disposed in the middle of the first fastener 501 or the sliding part 502, or the slide rail may be separately disposed at a relative end of the first fastener 501 or a relative end of the sliding part 502.

To facilitate the sliding part 502 to slide on the first fastener 501 and enable the sliding part 502 to slide smoothly, a ball 503 may be disposed. The ball 503 may be disposed on a surface that is of the first fastener 501 and that faces the sliding part 502. The ball 503 may be disposed on a surface that is of the sliding part 502 and that faces the first fastener 501. Alternatively, the ball 503 may be disposed in the slide rail. There are a plurality of balls 503, and the plurality of balls 503 may be disposed at even spacings.

In the foregoing embodiment, the sliding assembly 50 is disposed, so that the user can smoothly move the first display part 401 by manually pushing the first display part 401. However, pushing force applied to the first display part 401 is difficult to control, and easily causes damage to the first display part 401. Therefore, in some embodiments, the movable support rack 302 may drive the first display part 401 to move in an automatic manner.

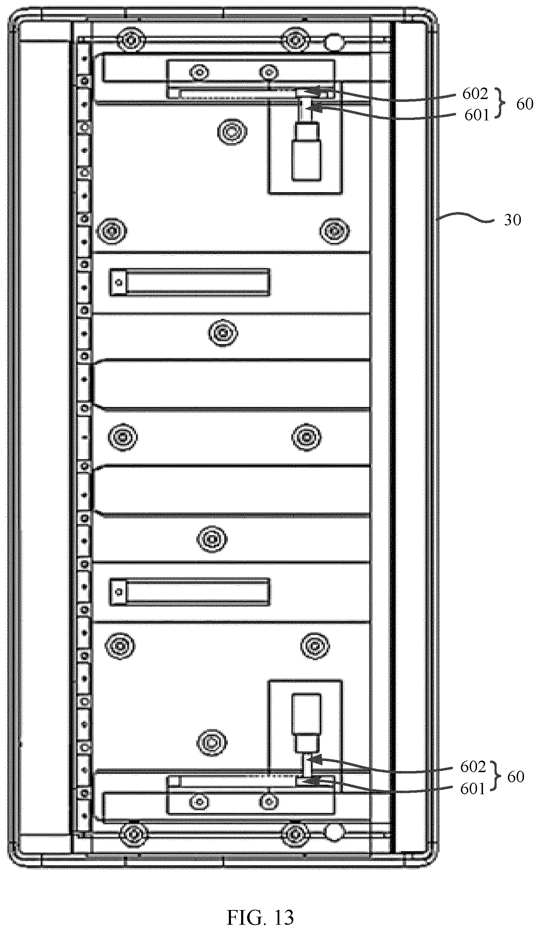

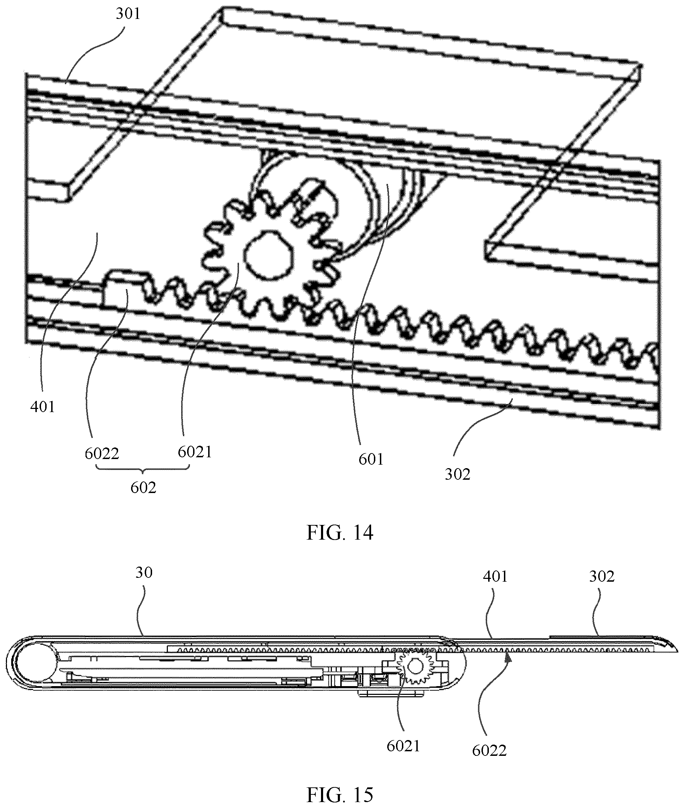

FIG. 13 is a schematic diagram of a position of a driving assembly in a state in an electronic device with a rollable display according to an embodiment of this application. FIG. 14 is a schematic diagram of a structure of a driving assembly in an electronic device with a rollable display according to an embodiment of this application. FIG. 15 is a schematic diagram of a position of a driving assembly in another state in an electronic device with a rollable display according to an embodiment of this application. Refer to FIG. 13 to FIG. 15. The mobile phone 300 provided in this embodiment of this application further includes at least one driving assembly 60. The driving assembly 60 may be located in the main support rack 301. The driving assembly 60 is configured to drive the movable support rack 302 to move, to enable the mobile phone 300 to extend from the initial display state to another extended display state. Alternatively, there may be two or more driving assemblies 60, to increase movement stability of the movable support rack 302. This is not limited in this embodiment.

In a possible implementation, the driving assembly 60 may include at least one first driving part 601, and the first driving part 601 may be a linear driving part. The linear driving part may be a linear motor. A housing of the linear motor is connected to the main support rack 301, and an output shaft of the linear motor is connected to the movable support rack 302. The linear driving part may also be another driving part well known by a person skilled in the art, which is not limited in this embodiment.

In another possible implementation, the driving assembly 60 may further include the first driving part 601 and a transmission assembly 602 connected to the first driving part 601. The transmission assembly 602 includes a rotating part 6021 and a first moving part 6022 that matches the rotating part 6021. The first driving part 601 is connected to the rotating part 6021, and the first driving part 601 drives the rotating part 6021 to rotate, so that the rotating part 6021 drives the movable support rack 302 to move.

The first driving part 601 may be a motor, and the motor may be a direct current brushless motor, a switching magnetic group motor, a stepper motor, a servo motor, a torque motor, or the like. The transmission assembly 602 may include but is not limited to a rack-and-pinion transmission structure or a lead screw motor transmission mechanism. For example, refer to FIG. 15. The rotating part 6021 is a gear, the first moving part 6022 is a rack engaged with the gear, and the rack is connected to the movable support rack 302. The rotating part 6021 may also be a lead screw motor, the rotating part 6021 is a lead screw, the first moving part 6022 is a nut connected to the screw, and the nut is connected to the movable support rack 302.

In this embodiment, the driving assembly 60 is disposed, and the driving assembly 60 drives the movable support rack 302 to move, to implement automatic movement of the first display part 401. In the manner in which the first display part 401 automatically moves, transmission is stable. This facilitates control of driving force that drives the first display part 401 to move, and does not easily damage the first display part 401.

In this embodiment of this application, the first display part 401 may be moved manually or automatically, so that the first display part 401 drives the second display part 402 to move. In a process in which the first display part 401 drives the second display part 402 to move, to prevent the second display part 402 from moving along with the first display part 401, and ensure that the first display part 401 can drive at least a part of the second display part 402 to be extended, one side of the second display part 402 needs to be fastened. In other words, one side of the second display part 402 is fastened, a fastened side of the second display part 402 is opposite to an adjacent side of the second display part 402 and the first display part 401. The following describes a manner of fastening one side of the second display part 402 with reference to two different positions: the second display part 402 is located inside the main support rack 301 and the second display part 402 is located outside the main support rack 301.

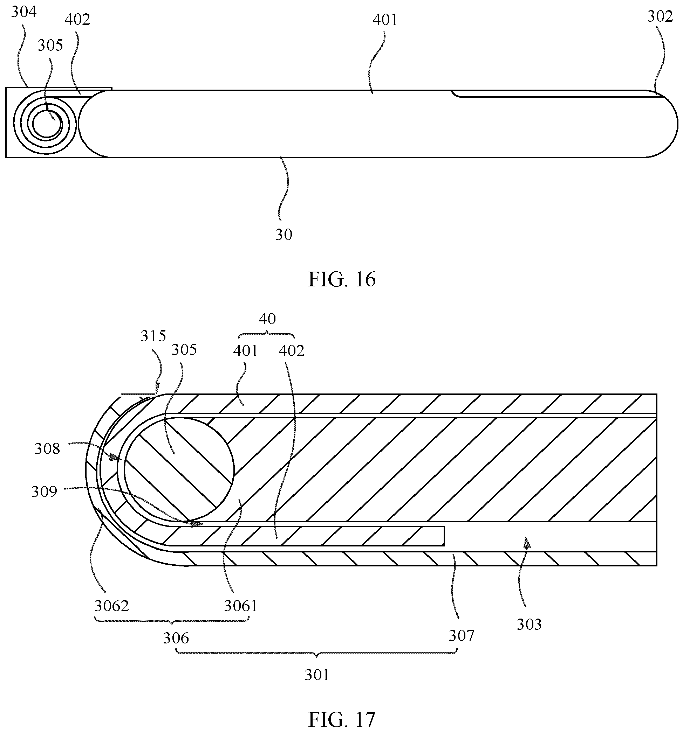

FIG. 16 is a schematic diagram of a position of a second display part of an electronic device with a rollable display according to an embodiment of this application. Refer to FIG. 16. The second display part 402 and the support shaft 305 are located outside the main support rack 301, the support shaft 305 is connected to the main support rack 301, and the support shaft 305 may be rotatively connected to the main support rack 301. The support shaft 305 is connected to the main support rack 301, an axis of the support shaft 305 is perpendicular to the movement direction of the first display part 401. The second display part 402 is rolled on the support shaft 305, and one side of the second display part 402 is fastened to the support shaft 305. In this way, the entire second display part 402 can be prevented from moving along with the first display part 401, so that the first display part 401 can drive at least a part of the second display part 402 to be extended. When the second display part 402 moves, the second display part 402 drives the support shaft 305 to rotate around the axis of the support shaft 305.

FIG. 16 shows a manner of fastening the second display part 402 on a side surface of the main support rack 301. It may be understood that the second display part 402 may be fastened on a rear surface or a front surface of the main support rack 301 in a same manner of fastening the second display part 402. Details are not described herein in this embodiment.

FIG. 16 shows a state in which the support shaft 305 and the second display part 402 disposed on the support shaft 305 are located outside the main support rack 301. When the support shaft 305 and the second display part 402 rolled on the support shaft 305 are located outside the main support rack 301, to avoid collision with the second display part 402, a protective cover 304 may be disposed. The protective cover 304 is connected to the main support rack 301. The support shaft 305 and the second display part 402 rolled on the support shaft 305 are located in the protective cover 304. The protective cover 304 protects the second display part 402 to prevent the second display part 402 from damage such as collision.

It may be understood that the support shaft 305 may alternatively be disposed in the main support rack 301, so that the second display part 402 rolled on the support shaft 305 is located in the main support rack 301, to prevent the second display part 402 from collision. The following describes a manner in which the second display part 402 is located in the main support rack 301 and the second display part 402 is fastened.

FIG. 17 is a second cross-sectional schematic view of an A-A cross section in FIG. 5. FIG. 17 shows a manner of fastening the second display part 402 in the main support rack 301. Refer to FIG. 17. The second display part 402 is located in the main support rack 301. In other words, the second display part 402 is located in the accommodation cavity 303. The support shaft 305 is disposed in the accommodation cavity 303, and the axis of the support shaft 305 is perpendicular to the movement direction of the first display part 401. The main support rack 301 has an entrance 315 for the second display part 402 to enter the accommodation cavity 303, and the second display part 402 enters the accommodation cavity 303 or moves out of the accommodation cavity 303 through the entrance 315. In a process of moving the second display part 402, the second display part 402 is guided by using a side wall of the support shaft 305, to keep the rear surface of the second display part 402 in a state in which the rear surface of the second display part 402 is attached to the support shaft 305 into the support shaft 305 or out of the accommodation cavity 303, and prevent the second display part 402 from entirely moving along with the first display part 401, so that the first display part 401 can drive at least a part of the second display part 402 to be extended.

Specifically, the main support rack 301 may include a middle frame 306 and a rear cover 307. The middle frame 306 may be located between the first display part 401 and the rear cover 307. The first display part 401 covers one surface of the middle frame 12, and the rear cover 307 is connected to the other surface of the middle frame 306. The middle frame 306 includes a middle plate 3061 and a frame 3062 connected to a periphery of the middle plate 3061, the middle plate 3061 is located in the accommodation cavity 303, and the first display part 401 covers one side of at least two frames 3062. The entrance 315 is formed between the first display part 401 and the frame 3062 that is not covered by the first display part 401. An inner side wall of the frame 3062 that is not covered by the first display part 401 and a side surface of the support shaft 305 form a first channel 308. An inner surface of the rear cover 307 and a side that is of the middle plate 3061 and that faces the rear cover 307 form a second channel 309 that communicates with the first channel 308. The second display part 402 enters the support shaft 305 through the entrance 315, the first channel 308, and the second channel 309. Movement of the second display part 402 is guided by using the first channel 308 and the second channel 309, and a display surface of the second display part 402 located in the first channel 308 and the second channel 309 is kept flat. This reduces arching of the second display part 402 when the second display part 402 is repeated rolled. The first channel 308 is an arc-shaped channel, and the second display part 402 is rolled when passing through the first channel 308.

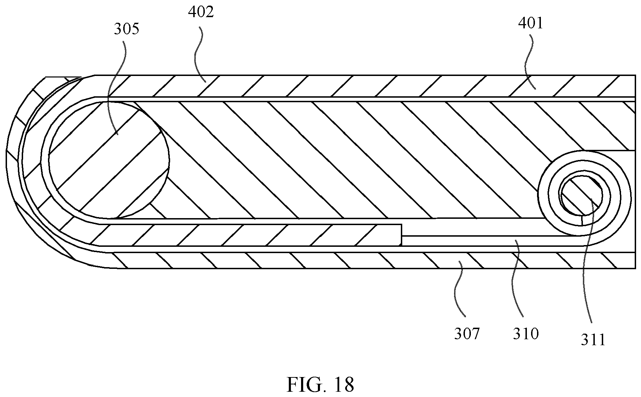

FIG. 18 is a third cross-sectional schematic view of an A-A cross section in FIG. 5. FIG. 18 shows another manner of fastening the second display part 402 in the main support rack 301. Refer to FIG. 18. The mobile phone 300 further includes at least one connection assembly, and the second display part 402 is connected to the main support rack 301 by using the connection assembly. The connection assembly includes a rotating shaft 311 and a reinforcement film 310 wound on the rotating shaft 311. A first side of the reinforcement film 310 is fastened to the rotating shaft 311, and a second side of the reinforcement film 310 is connected to the second display part 402. The second side of the reinforcement film 310 may be connected to a fastening side of the second display part 402, and a part of the second display part 402 is wound on the support shaft 305, so that the second display part 402 extends out of the main support rack 301 and is connected to the first display part 401, and the first side of the reinforcement film 310 is opposite to the second side of the reinforcement film 310.

The reinforcement film 310 may be a PI reinforcement film, and strength of the second display part 402 is increased by using the reinforcement film 310. The fastening side of the second display part 402 is connected to the reinforcement film 310, the reinforcement film 310 is wound on the rotating shaft 311, a part of the second display part 402 is wound on the support shaft 305, and the second display part 402 is supported by using the rotating shaft 311 and the support shaft 305. When the first display part 401 moves, the first display part 401 drives the second display part 402 to move, the second display part 402 drives the support shaft 305 to rotate, and the second display part 402 drives the reinforcement film 310 connected to the second display part 402 to move. Driving force of moving the first display part 401 and supporting force of the rotating shaft 311 for the reinforcement film 310 jointly provide tensile force for the second display part 402, so that the second display part 402 remains flat, arching that occurs when the second display part 402 is repeatedly rolled is reduced.

To avoid affecting a display effect of the second display part 402, the reinforcement film 310 is connected to the rear surface of the second display part 402. In other words, the reinforcement film 310 is connected to a surface opposite to the display surface of the second display part 402. The reinforcement film 310 may be bonded to the rear surface of the second display part 402 by using glue dispensing, adhesive, or the like.

In comparison with the embodiment in FIG. 17, the embodiment in FIG. 18 adds the reinforcement film 310 and the rotating shaft 311. Other structures of the embodiment in FIG. 18 may be the same as the structure of the embodiment in FIG. 17. A structure of the embodiment in FIG. 18 that is the same as the structure of the embodiment in FIG. 17 is described in detail in the foregoing embodiment in FIG. 17, and details are not described herein again.

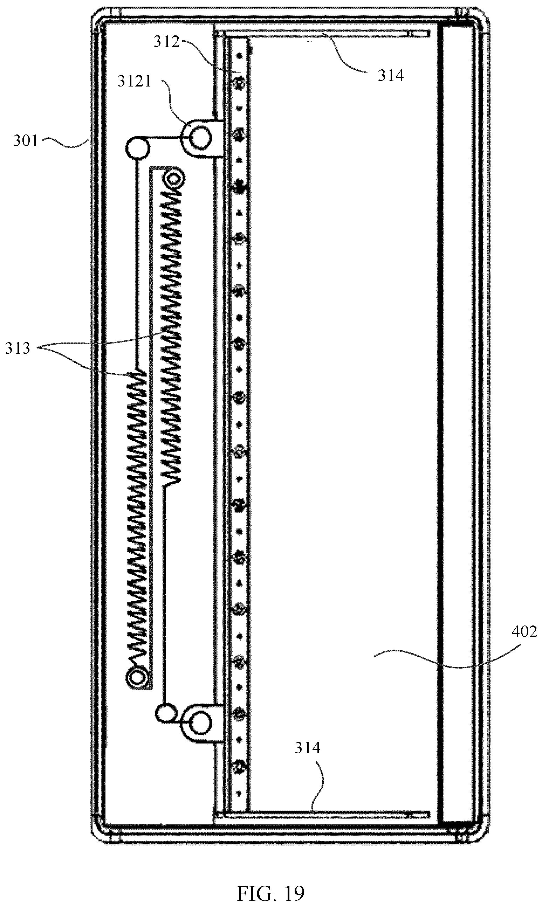

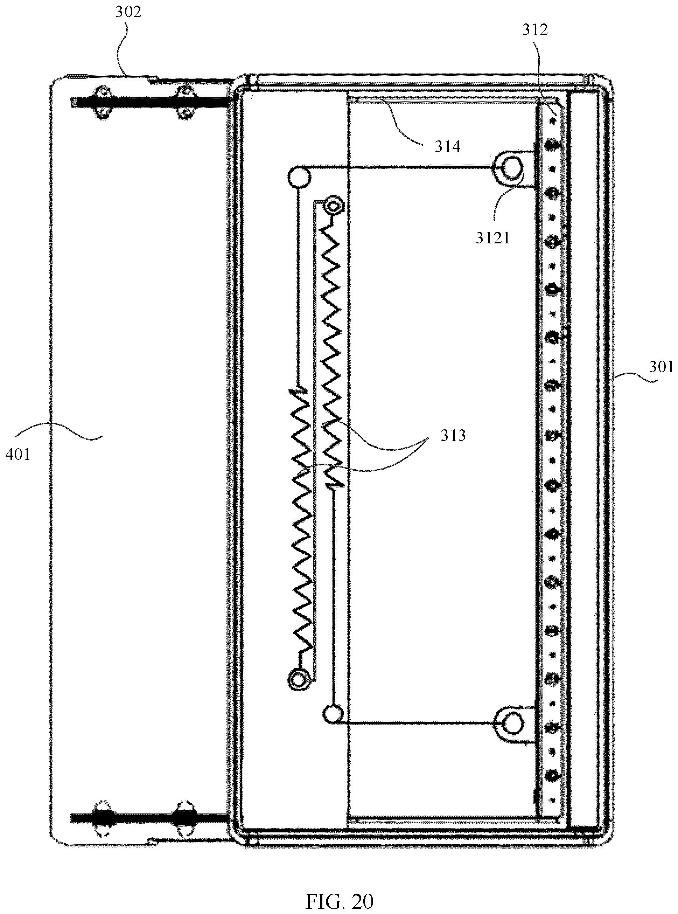

FIG. 19 is a schematic diagram of a structure of a connection assembly in an electronic device with a rollable display according to an embodiment of this application. FIG. 20 is a schematic diagram of a position of a connection assembly in a state in an electronic device with a rollable display according to an embodiment of this application. FIG. 19 and FIG. 20 show still another manner of fastening the second display part 402 in the main support rack 301. FIG. 19 shows a position of each component in a connection assembly when the mobile phone 300 is in an initial display state. FIG. 20 shows a position of each component in a connection assembly when the first display part 401 in the mobile phone 300 is moved out of the main support rack 301. Refer to FIG. 19 and FIG. 20. The connection assembly includes an installation part 312 and at least one connector 313. A first end of the connector 313 is connected to the main support rack 301, a second end of the connector 313 is connected to the installation part 312, the installation part 312 is connected to the second display part 401, and the installation part 312 is configured to fasten a fastening side of the second display part 401.

The installation part 312 may include a clamping part. For example, the clamping part may be a clamping plate or two flat plates. The fastening side of the second display part 401 is clamped in the clamping plate. Clamping force of the clamping plate is adjusted, so that the fastening side of the second display part 401 is fastened in the clamping plate, to prevent the fastening side of the second display part 401 from being detached from the clamping plate. Alternatively, the fastening side of the second display part 401 is located between the two flat plates. A screw is installed on the flat plates, and the fastening side of the second display part 401 is connected between the two flat plates by using a screw connection. Alternatively, the fastening side of the second display part 401 may be connected between the two flat plates in a bonding manner or the like. To facilitate connection between the installation part 312 and the connector 313, a connecting point 3121 is disposed on the installation part 312, and the connector 313 is connected to the connecting point 3121. The connecting point 3121 may extend toward the connector 313, and the connecting point 3121 may have a connecting hole.

Specifically, the connector 313 may be an elastic part. For example, the connector 313 is a spring or an elastic connecting rope. One end of the elastic part is relatively fastened to the main support rack 301, and the other end of the elastic part is connected to the installation part 312. When the mobile phone 300 is in the initial display state, that is, when the mobile phone 300 performs display only by using the first display part 401, the elastic part is in a free state. When the first display part 401 moves toward the first side of the main support rack 301, the first display part 401 drives the second display part 401 to move, and the second display part 401 drives the elastic part to stretch by using the installation part 312. Tensile force of the elastic part and driving force that drives the first display part 401 to move can keep the second display part 402 flat, so that arching that occurs when the second display part 402 is repeatedly rolled can be reduced. When the first display part 401 moves toward the second side of the main support rack 301, the first display part 401 drives the second display part 401 to return to the main support rack 301, and the second display part 401 drives the elastic part to retract to the free state by using the installation part 312.

To provide uniform tensile force for the second display part 402, there are at least two connectors 313. That is, two or more elastic parts may be disposed, and the elastic parts are disposed at even spacings. In some embodiments, when there are two or more elastic parts, one end of each elastic part is connected to each other, and the other end of each elastic part is connected to the installation part 312 at even spacings. Therefore, the tensile force of each elastic part is balanced. One end of each elastic part may be directly connected, or may be connected by using another elastic part. This is not limited in this embodiment.

To enable the second display part 402 to move smoothly, a rail 314 is disposed in the main support rack 301. Two rails 314 may be disposed. The two rails 314 are respectively located on a third side of the second display part 401 and a fourth side of the second display part 401. The third side of the second display part 401 and the fourth side of the second display part 401 are parallel to the movement direction of the second display part 401.

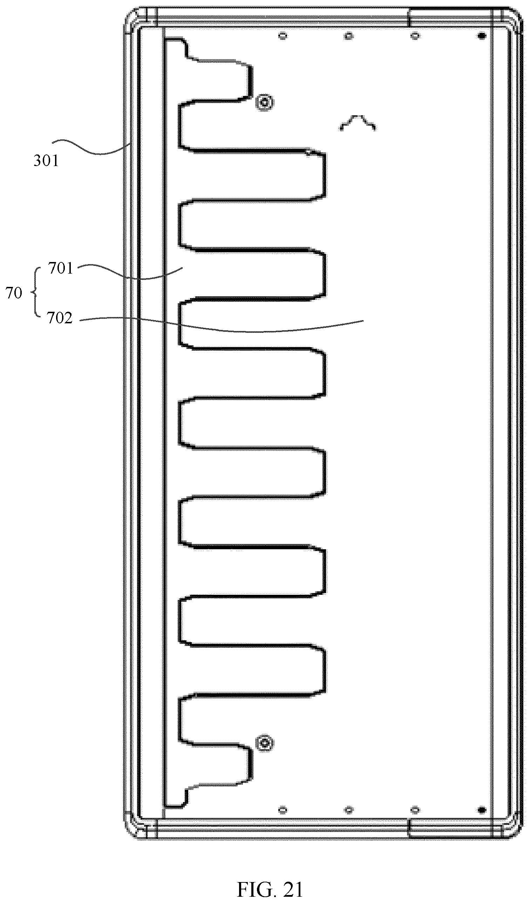

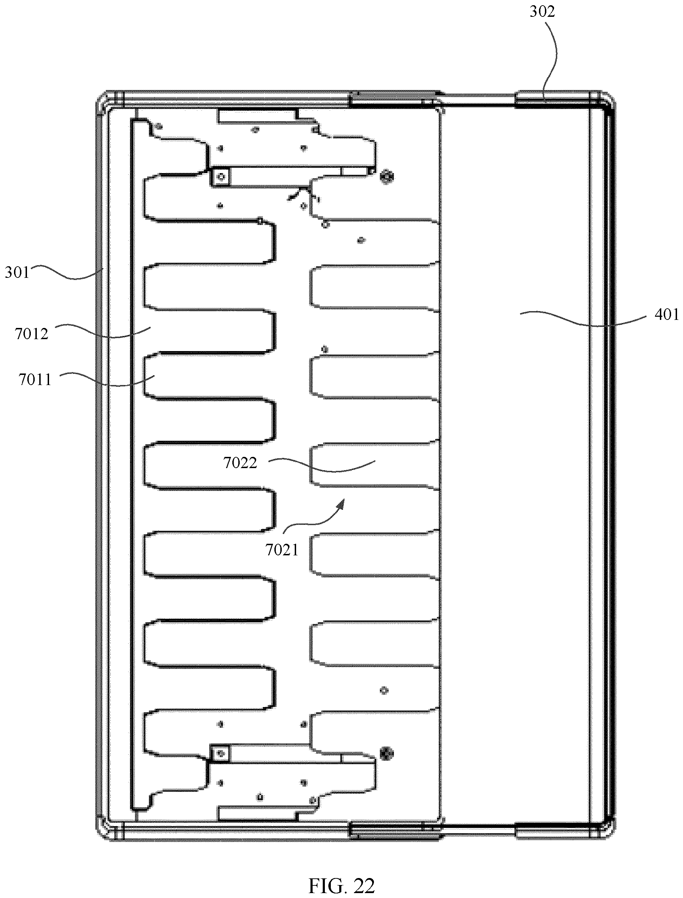

FIG. 21 is a schematic diagram of a structure of a support assembly in an electronic device with a rollable display according to an embodiment of this application. FIG. 22 is a schematic diagram of a position of a support assembly in an extended state in an electronic device with a rollable display according to an embodiment of this application. Refer to FIG. 21 and FIG. 22. In this embodiment of this application, the mobile phone 300 further includes the support assembly 70. The support assembly 70 is configured to support the first display part 401 outside the main support rack 301, when the first display part 401 moves out of the main support rack 301, that is, when the mobile phone 300 is in the extended display state. When the first display part 401 moves out of the main support rack 301, the first display part 401 is detached from a support function of the main support rack 301. As a result, strength of the first display part 401 is reduced, and when a display surface of the first display part 401 is operated, the first display part 401 is easily bent. Consequently, flatness of the first display part 401 cannot be ensured, and user experience is poor. Therefore, in this application, the mobile phone 300 supports the first display part 401 located outside the main support rack 301 by using the support assembly 70, to avoid that the first display part 401 is bent when the user performs an operation. Therefore, user experience can be improved.

The support assembly 70 is located in the main support rack 301. The support assembly 70 includes a second fastener 701 and a second moving part 702. The second fastener 701 and the second moving part 702 are combined to jointly support a rear surface of the first display part 401. The second fastener 701 is connected to the main support rack 301. The second moving part 702 is connected to the first display part 401. In this way, when the first display part 401 moves out of the main support rack 301, the first display part 401 drives the second moving part 702 to move out of the main support rack 301, and supports the first display part 401 outside the main support rack 301 by using the second moving part 702.

In a possible implementation, the second fastener 701 may be inserted and jointed with the second moving part 702. The second fastener 701 may have first concave areas 7011 and first convex areas 7012 that are disposed at spacings. The second moving part 702 may have second concave areas 7021 and second convex areas 7022 that are disposed at spacings. The second convex areas 7022 are inserted into the first concave areas 7011. The first convex areas 7012 are inserted into the second concave areas 7021. When the first display part 401 drives the second moving part 702 to move out of the main support rack 301, the second concave areas 7021 and the second convex areas 7022 of the second moving part 702 are located in the main support rack 301, and a remaining part of the second moving part 702 is located outside the main support rack 301. In this way, when a user performs an operation on the first display part 401 outside the main support rack 301, a support function of the second convex areas 7022 is used, so that the second moving part 702 located outside the main support rack 301 is not easy to bend, and pressure resistance performance of the first display part 401 is improved.

The second concave areas 7021 may match the second convex areas 7022, and the first convex areas 7012 may match the second concave areas 7021. For example, the second concave areas 7021 and the second convex areas 7022 may be rectangular, and the first convex areas 7012 and the second concave areas 7021 may be rectangular. Alternatively, the second concave areas 7021 and the second convex areas 7022 may be semicircles, triangles, or the like, and the first convex areas 7012 and the second concave areas 7021 may be semicircles, triangles, or the like. This is not limited in this embodiment. The first concave areas 7011 and the first convex areas 7012 may be disposed at even spacings. Correspondingly, the second concave areas 7021 and the second convex areas 7022 may also be disposed at even spacings, so that the second convex area 7022 can more stably support the second moving part 702 located outside the main support rack 301. It may be understood that a larger area of the second convex areas 7022 indicates that the second convex areas 7022 provide better support for the second moving part 702 located outside the main support rack 301.

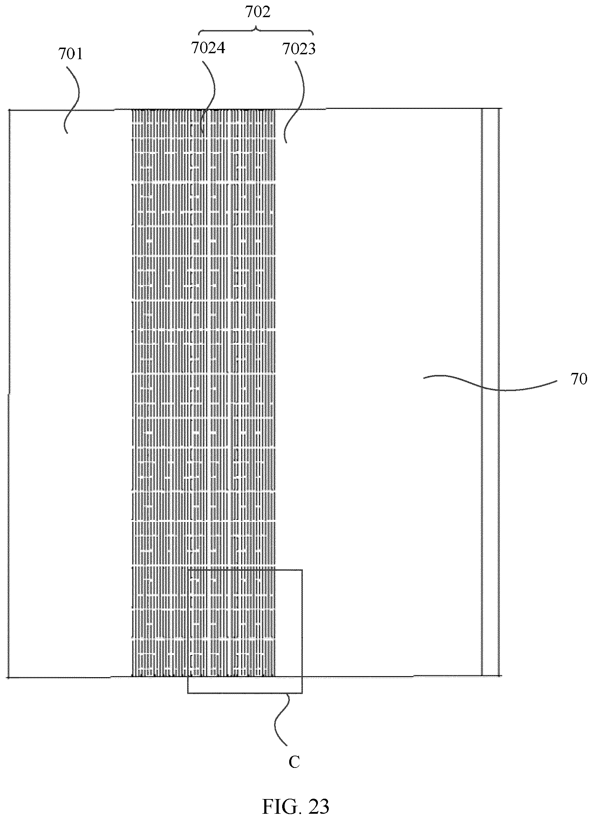

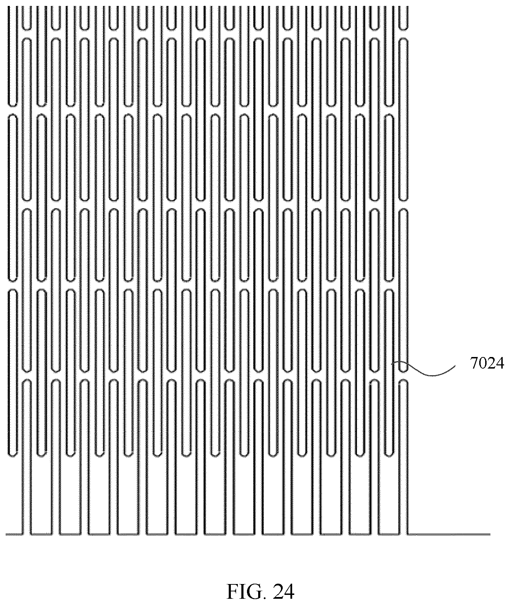

FIG. 23 is a schematic diagram of a structure of a support assembly in an electronic device with a rollable display according to an embodiment of this application. FIG. 24 is an enlarged schematic diagram of a position C in FIG. 23. Refer to FIG. 23 and FIG. 24. In another possible implementation, the second moving part 702 includes a support area 7023 and a retractable area 7024 connected to the support area 7023. The retractable area 7024 is connected to the second fastener 701. The retractable area 7024 is elastic. The support area 7023 is connected to the first display part 401, and supports the first display part 401 by using the support area 7023. The first display part 401 drives the support area 7023 to move, so that the retractable area 7024 is extended or retracted, and one side of the retractable area 7024 is fastened by using the second fastener 701. The retractable area 7024 may be a plurality of through holes disposed on the second moving part 702.

When the retractable area 7024 is extended, the retractable area 7024 may be bent to bend the first display part 401. The rear surface of the first display part 401 may be filled with foam, steel sheets, or the like, to achieve an objective of flattening a surface of the mobile phone 300.

In a third possible implementation, the second moving part 702 is a retractable support plate. The support plate may be formed by connecting a plurality of support rods by using a retractable part. When the retractable part is compressed, adjacent support rods are combined to form a support surface. When the retractable part is stretched, adjacent support rods are separated from each other, and there is a spacing between adjacent support rods 7023, to increase an area of the support plate. Alternatively, the support plate may be formed by hinging a plurality of support rods, where four support rods are hinged to form a parallelogram, and a plurality of parallelograms are sequentially hinged to form a support plate similar to a parallelogram retractable door. One side of the second moving part 702 is connected to the second fastener 701, one side of the second moving part 702 is fastened by using the second fastener 701, and the other side of the second moving part 702 is driven to move by using the first display part 401, so that the second moving part 702 is extended or retracted.

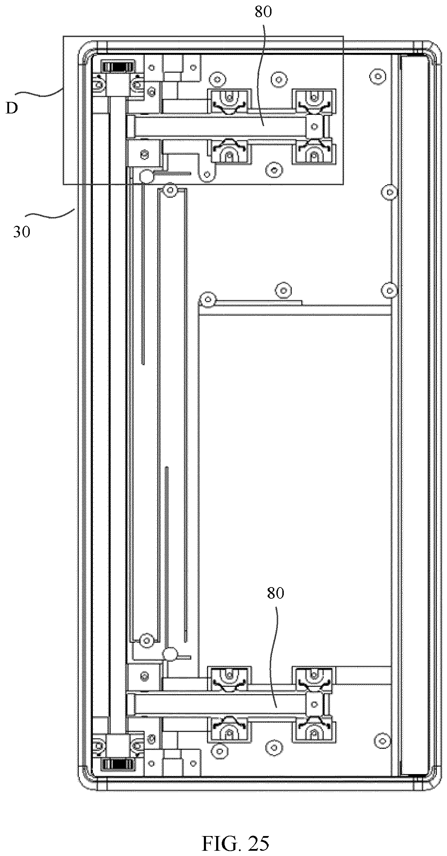

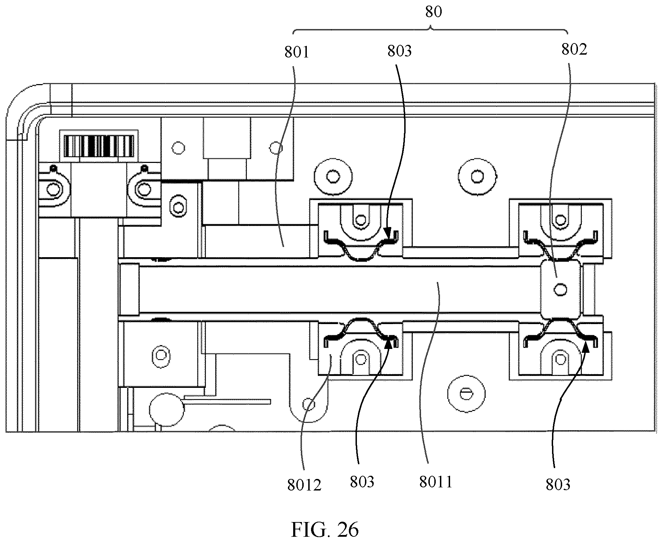

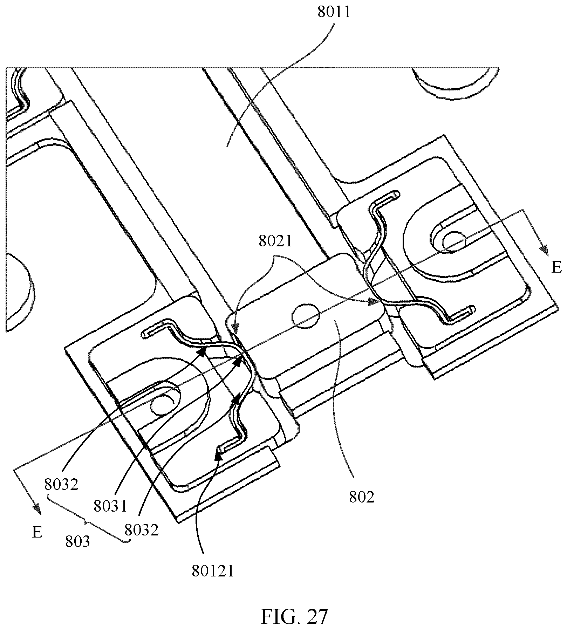

FIG. 25 is a schematic diagram of a position of a locking assembly in an electronic device with a rollable display according to an embodiment of this application. FIG. 26 is an enlarged schematic diagram of a position D in FIG. 25. FIG. 27 is a schematic diagram of a structure of a locking assembly in an electronic device with a rollable display according to an embodiment of this application. Refer to FIG. 25 to FIG. 27. In this application, the mobile phone 300 further includes at least one locking assembly 80. The locking assembly 80 is configured to fasten the first display part 401 in the initial display state and in the extended display state, to maintain a relative position between the first display part 401 and the main support rack 301 and prevent the first display part 401 from moving.

The locking assembly 80 may be located in the main support rack 301, and the locking assembly 80 may be a mechanical self-locking assembly, an electric self-locking assembly, or a slide rail steady-state self-locking assembly. For example, the electric self-locking assembly may be an existing electromagnetic locking part. The mechanical self-locking assembly and the electric self-locking assembly may use a locking structure well known by a person skilled in the art. This is not limited in this embodiment.

The slide rail steady-state self-locking assembly may include a support base 801, a stopper 802, and at least two pairs of springs 803. The support base 801 is connected to the main support rack 301, a slide rail 8011 is provided on the support base 801, and an extension direction of the slide rail 8011 is the same as the movement direction of the first display part 401. The stopper 802 is located in the slide rail 8011, the stopper 802 can move along the extension direction of the slide rail 8011, and the stopper 802 is connected to the movable support rack 302. Each pair of springs 803 is oppositely disposed in the slide rail 8011, and a pair of springs 803 is disposed inside the slide rail 8011 and at an end that is of the slide rail 8011 and that faces the first display part 401.

When the mobile phone 300 is in the initial display state, two sides of the stopper 802 respectively press against a pair of springs 803 located inside the slide rail 8011, so that the stopper 802 remains in a current position, to prevent the first display part 401 from moving toward the first side of the main support rack 301. When the movable support rack 302 drives the first display part 401 to move outwards toward the main support rack 301, so that the mobile phone 300 is in the extended display state, the movable support rack 302 drives the stopper 802 to move, and the stopper 802 is detached from a position pressing against a pair of springs 803 located inside the slide rail 8011. As the movable support rack 302 continues to move, the stopper 802 moves along the extension direction of the slide rail 8011 until two ends of the stopper 802 respectively press against a pair of springs 803 at ends that are of the slide rail 8011 and that face the first display part 401. In this case, at least a part of the second display part 402 is extended, and the stopper 802 is clamped by using the springs 803, so that the stopper 802 remains in a current position, to prevent the first display part 401 from moving toward the second side of the main support rack 301.

A spring fastening rack 8012 is disposed on the support base 801, and the spring 803 is fastened by using the spring fastening rack 8012. The spring fastening rack 8012 is provided with an installation slot 80121, and the spring 803 is provided with a pressing area 8031 and fasteners 8032 separately connected to two sides of the pressing area 8031. The fasteners 8032 are located in the installation slot 80121, and the pressing areas 8031 are configured to contact the stopper 802. At least a guiding area 8021 is provided on a surface that is of the stopper 802 and that faces the spring 803, the spring 803 enters a state in which the spring 803 presses against the surface of the stopper 802 by using a guiding function of the guiding area 8021, or the spring 803 enters a state in which the spring 803 is detached from pressing against the stopper 802 by using a guiding function of the guiding area 8021.

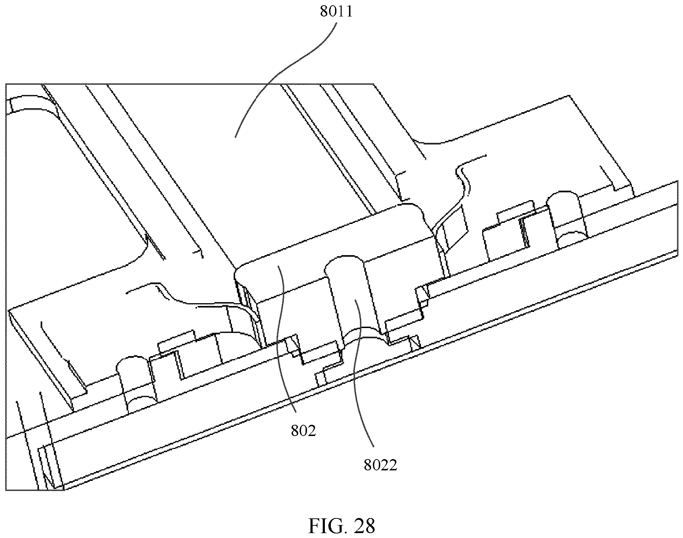

FIG. 28 is a cross-sectional schematic view of a cross section E-E in FIG. 27. Refer to FIG. 28. The stopper 802 is further provided with a threaded hole 8022, and a screw passes through the threaded hole 8022 and is connected to the movable support rack 302. The stopper 802 may also be connected to the movable support rack 302 in a manner of bonding, clamping, or the like. This is not limited herein.

### Scenario 2

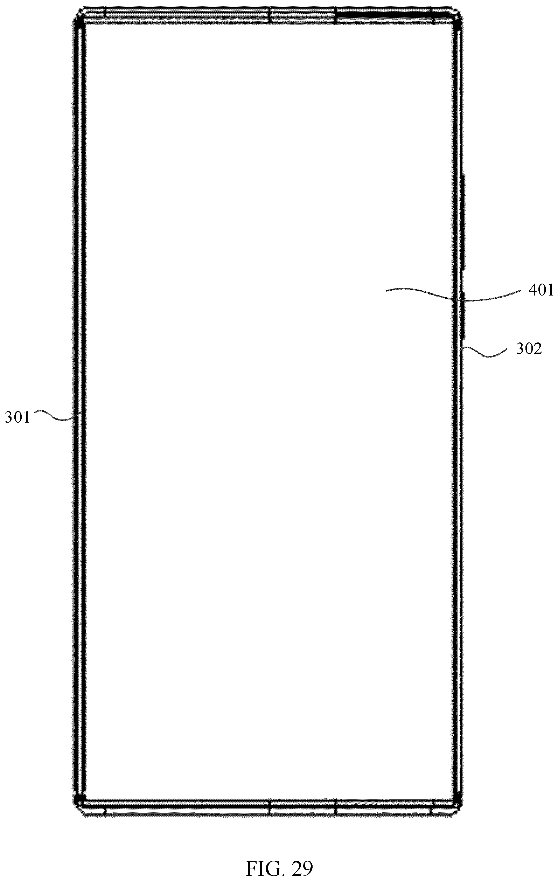

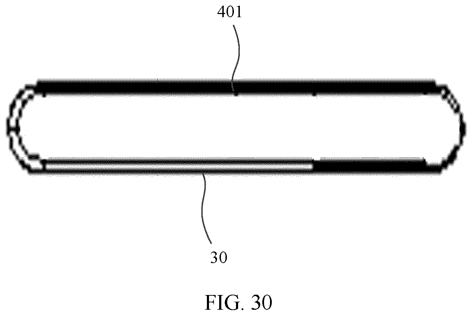

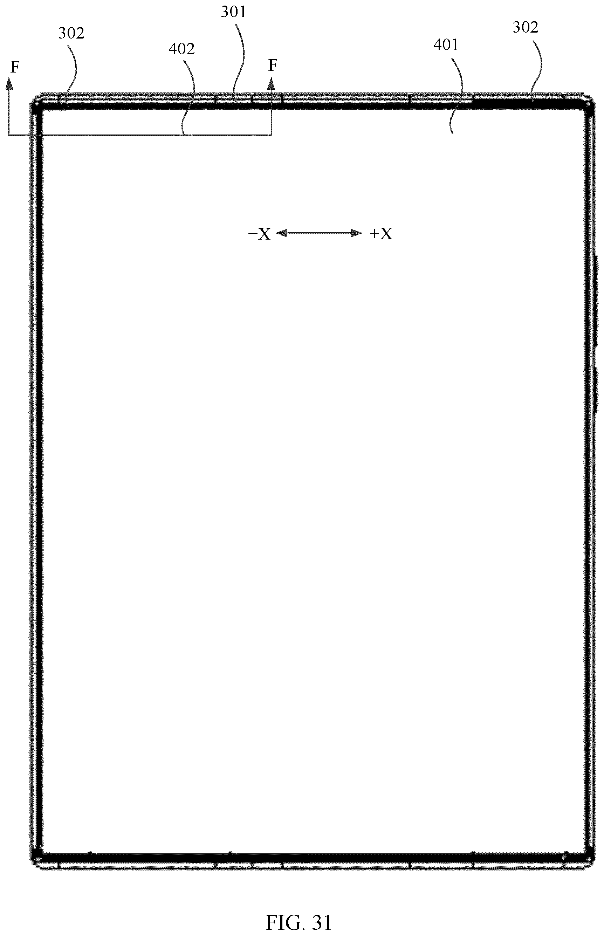

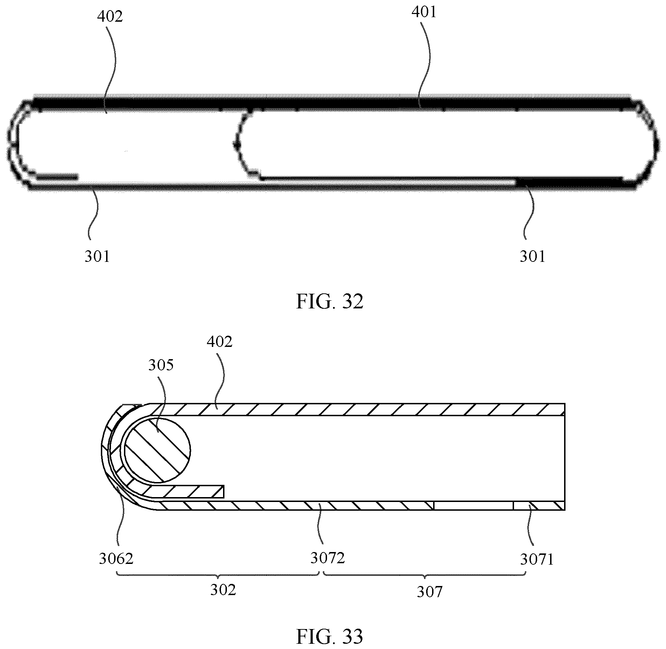

FIG. 29 is a schematic diagram of a structure of an electronic device with a rollable display according to an embodiment of this application. FIG. 30 is a bottom view of an electronic device with a rollable display according to an embodiment of this application. FIG. 31 is a schematic diagram of a structure of an electronic device with a rollable display in an extended display state according to an embodiment of this application. FIG. 32 is a bottom view of an electronic device with a rollable display in an extended display state according to an embodiment of this application. Refer to FIG. 29 to FIG. 32. The mobile phone 300 provided in an embodiment of this application includes the device body 30 and the rollable display 40. The rollable display 40 includes the first display part 401 and the second display part 402 that are arranged in a first direction, and the second display part 402 is rolled on the support shaft 305. The device body 30 includes the main support rack 301 and the movable support rack 302 that can move relative to the main support rack 301. The movable support rack 302 is connected to the second display part 402, and the support shaft 305 is located on the movable support rack 302.

In this embodiment, the movable support rack 302 may move toward the second side of the main support rack 301, that is, the movable support rack 302 is extended in a direction of -X in FIG. 31, so that a part of the second display part 402 is extended in a planar shape. In this way, the first display part 401 and the extended second display part 402 jointly form a display area, so that the mobile phone 300 is in the extended display state shown in FIG. 31. Therefore, the display area of the mobile phone 300 is increased without increasing a thickness of the entire mobile phone 300, and a requirement of the user for a large display area of the mobile phone 300 can be met.

The movable support rack 302 may move toward the first side of the main support rack 301, that is, the movable support rack 302 rolls in a direction of +X in FIG. 31, so that at least a part of the second display part 402 is rolled, the mobile phone 300 is in the initial display state shown in FIG. 29, and the first display part 401 is used as an effective display area. In this way, a normal display requirement of the user for the screen of the mobile phone 300 is met, and the mobile phone 300 is easy to carry

A rear cover 307 of the main support rack 301 may include a first rear cover 3071 and a second rear cover 3072. A frame 3062 is connected to the second rear cover 3072 to form the movable support rack 302. The driving assembly 60 is connected to the second rear cover 3072. The driving assembly 60 drives the movable support rack 302 and the support shaft 305 to move toward a first side of the main support rack 301 by using the second rear cover 3072. Alternatively, the driving assembly 60 drives the movable support rack 302 and the support shaft 305 to move toward a second side of the main support rack 301, so that the second display part 402 is extended or rolled.

A structure of the movable support rack 302 in the scenario 2 is different from a structure of the movable support rack 302 in the scenario 1. In the scenario 2, the movable support rack 302 drives the second display part 402 to be extended or rolled. However, in the scenario 1, the movable support rack 302 drives the first display part 402 to move. Other structures the mobile phone 300 are the same in the scenario 1 and the scenario 2, and details are not described herein again.

FIG. 33 is a first cross-sectional schematic view of an F-F cross section in FIG. 31. Refer to FIG. 33. In this embodiment of this application, the driving assembly 60 drives the movable support rack 302 to move, so that the second display part 402 is extended or rolled. A structure and a working principle of the driving assembly 60 are described in detail in the foregoing scenario 1, and details are not described herein again.

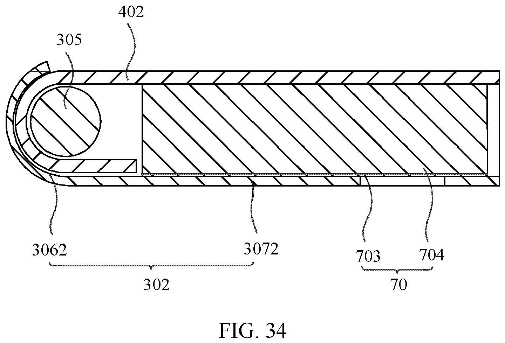

FIG. 34 is a second cross-sectional schematic view of a cross section F-F in FIG. 31. Refer to FIG. 34. In this embodiment, the support assembly 70 may be a platform support assembly. The support assembly 70 includes a second driving part 703 and a support part 704 connected to the second driving part 703. The support part 704 may be a platform. The second driving part 703 drives the support part 704 to move to the rear surface of the second display part 402, and the rear surface of the second display part 402 is supported by using the support part 704.

The support assembly 70 is located in the main support rack 301, and the second driving part 703 is connected to the second rear cover 3072. The second driving part 703 may be a linear motor, a hydraulic cylinder, or the like.

Alternatively, a structure of the support assembly 70 may be the same as that of the support assembly 70 in any embodiment of the foregoing scenario 1, and details are not described herein again.

In this embodiment, the locking assembly 80 in the foregoing scenario 1 may also be set. A structure and working principle of the locking assembly 80 are not described herein again.

### Scenario 3

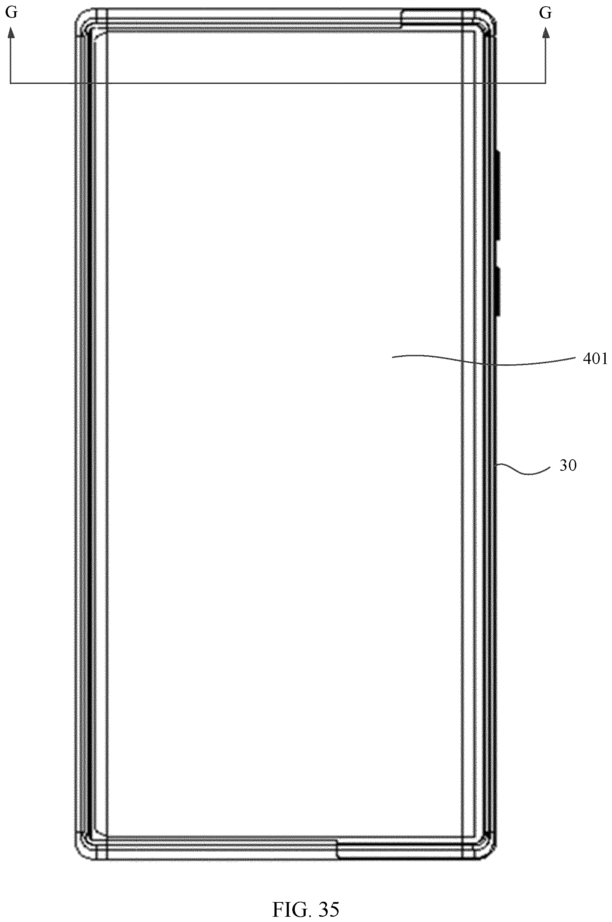

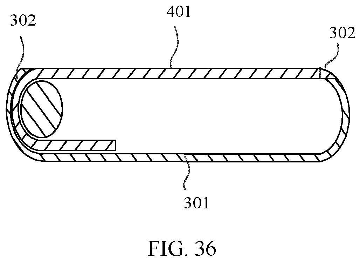

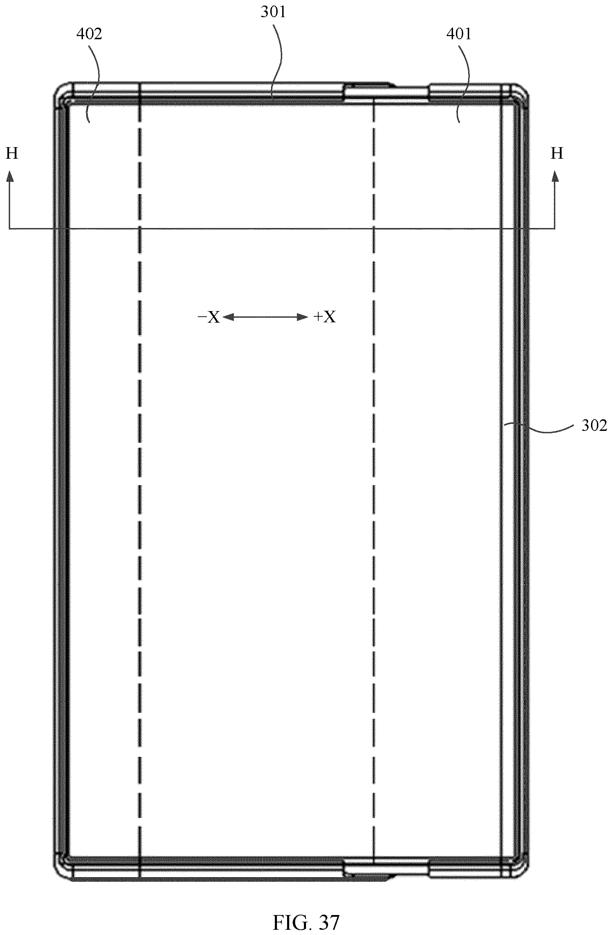

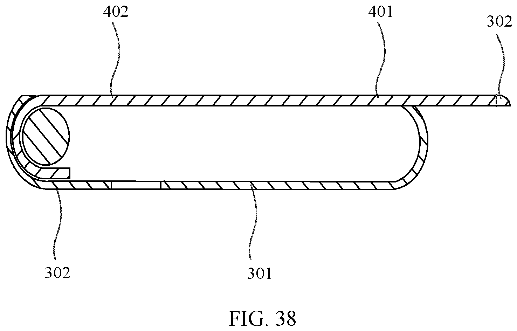

FIG. 35 is a schematic diagram of a structure of an electronic device with a rollable display according to an embodiment of this application. FIG. 36 is a cross-sectional schematic view of a G-G cross section in FIG. 35. FIG. 37 is a schematic diagram of a structure of an electronic device with a rollable display in an extended display state according to an embodiment of this application. FIG. 38 is a cross-sectional schematic view of an H-H cross section in FIG. 37. Refer to FIG. 35 to FIG. 38. The mobile phone 300 provided in an embodiment of this application includes the device body 30 and the rollable display 40. The rollable display 40 includes the first display part 401 and the second display part 402 that are arranged in a first direction, and the second display part 402 is rolled on the support shaft 305. The device body 30 includes the main support rack 301 and at least two movable support racks 302 that can move relative to the main support rack 301. A first movable support rack 302 is connected to the first display part 401, a second movable support rack 302 is connected to the second display part 402, and the support shaft 305 is located on the movable support rack 302.

A structure of the first movable support rack 302 is the same as the structure of the movable support rack 302 in the foregoing scenario 1, and a structure of the second movable support rack 302 is the same as the structure of the movable support rack 302 in the foregoing scenario 2.

The first movable support rack 302 drives the first display part 401 to move toward the first side of the main support rack 301, and the second movable support rack 302 drives the second display part 402 to move toward the second side of the main support rack 301, so that at least a part of the second display part 402 is extended, and the mobile phone 300 is in the extended display state shown in FIG. 37 and FIG. 38. The first movable support rack 302 drives the first display part 401 to move toward the second side of the main support rack 301, and the second movable support rack 302 drives the second display part 402 to move toward the first side of the main support rack 301, so that at least a part of the second display part 402 is rolled, and the mobile phone 300 is in the initial display state shown in FIG. 35 and FIG. 36. The first side of the main support rack 301 is opposite to the second side of the main support rack 301, the first side of the main support rack 301 is in a +X direction in FIG. 37, and the second side of the main support rack 301 is in a -X direction in FIG. 37.

In this embodiment, the display area of the mobile phone 300 may be increased according to different requirements of the user. For example, the two movable support racks 302 move in opposite directions at the same time, to increase the display area of the mobile phone 300. Alternatively, the first movable support rack 302 is moved, to increase the display area of the mobile phone 300. Alternatively, the second movable support rack 302 is moved, to increase the display area of the mobile phone 300.

An implementation in which the first movable support rack 302 drives the first display part 401 to move toward the first side of the main support rack 301 or to roll toward the second side of the main support rack 301, so that an implementation in which at least a part of the second display part 402 is extended or rolled is the same as that in the foregoing scenario 1, and details are not described herein again. An implementation in which the second movable support rack 302 drives the second display part 402 to extend toward the second side of the main support rack 301 or roll toward the first side of the main support rack 301, so that an implementation in which at least a part of the second display part 402 is extended or rolled is the same as that in the foregoing scenario 2, and details are not described herein again.

## Claims

1. An electronic device with a rollable display, comprising a device body, the rollable display, and a support assembly, wherein the device body comprises a support shaft, the rollable display comprises a first display part and a second display part that are arranged in a first direction, the second display part is rolled, and the second display part is wound around the support shaft; and
a display area is formed on at least one side surface of the device body, the device body has an initial display state and an extended display state; in the initial display state, the first display part forms the display area, and in the extended display state, the first display part and at least a part of the second display part form the display area; and the support assembly is configured to support the display area in the extended display state.

2. The electronic device with a rollable display according to claim 1, wherein the device body comprises a main support rack and a movable support rack that moves relative to the main support rack, the movable support rack is connected to the first display part, and the support shaft is located on the main support rack.

3. The electronic device with a rollable display according to claim 1, wherein the device body comprises a main support rack and a movable support rack that moves relative to the main support rack, the movable support rack is connected to the second display part, and the support shaft is located on the movable support rack.

4. The electronic device with a rollable display according to claim 2, further comprising a sliding assembly, wherein the sliding assembly comprises a first fastener and a sliding part that slides relative to the first fastener, the first fastener is connected to the main support rack, and the sliding part is connected to the first display part.

5. The electronic device with a rollable display according to claim 2 or 3, further comprising at least one driving assembly, wherein the driving assembly is configured to drive the movable support rack to move, to extend the device body from the initial display state to the extended display state.

6. The electronic device with a rollable display according to claim 5, wherein the driving assembly comprises a first driving part, and the first driving part is a linear driving part.

7. The electronic device with a rollable display according to claim 5, wherein the driving assembly comprises a first driving part and a transmission assembly connected to the first driving part; the transmission assembly comprises a rotating part and a first moving part that matches the rotating part; the first driving part is connected to the rotating part and drives the rotating part to rotate, so that the rotating part drives the first moving part to move; and the first moving part is connected to the movable support rack.

8. The electronic device with a rollable display according to any one of claims 2 to 7, wherein the support assembly is configured to support the first display part and/or the second display part that are/is located outside the main support rack.

9. The electronic device with a rollable display according to any one of claims 2 to 7, wherein the support assembly is located in the main support rack, the support assembly comprises a second fastener and a second moving part, the second fastener and the second moving part cooperate to support a rear surface of the first display part, the second fastener is connected to the main support rack, the second moving part is connected to the first display part, and/or the second moving part is connected to the second display part; and in the extended display state, the second moving part supports the first display part and/or the second display part that are/is located outside the main support rack.

10. The electronic device with a rollable display according to claim 9, wherein in the extended display state, a part of the second moving part is located in the main support rack.

11. The electronic device with a rollable display according to claim 9, wherein the second moving part is a retractable support plate.

12. The electronic device with a rollable display according to any one of claims 2 to 7, wherein the support assembly comprises a second driving part and a support part connected to the second driving part, and the second driving part drives the support part to extend to an outer side of the main support rack, to support the second display part located on the outer side of the main support rack.

13. The electronic device with a rollable display according to any one of claims 2 to 12, further comprising at least one connection assembly, and the second display part is connected to the main support rack by using the connection assembly.

14. The electronic device with a rollable display according to claim 13, wherein the connection assembly comprises a rotating shaft and a reinforcement film wound on the rotating shaft, a first side of the reinforcement film is fastened to the rotating shaft, and a second side of the reinforcement film is connected to the second display part.

15. The electronic device with a rollable display according to claim 14, wherein the reinforcement film is connected to a rear surface of the second display part.

16. The electronic device with a rollable display according to claim 13, wherein the connection assembly comprises an installation part and at least one connector, a first end of the connector is connected to the main support rack, a second end of the connector is connected to the installation part, and the installation part is connected to the second display part.

17. The electronic device with a rollable display according to any one of claims 2 to 16, wherein a distance between an axis of the support shaft and a display surface of the first display part is equal to a distance between the axis of the support shaft and a display surface of the second display part.

18. The electronic device with a rollable display according to any one of claims 2 to 17, further comprising at least one locking assembly, wherein the locking assembly is configured to fasten the first display part and/or the second display part in the extended display state.

19. The electronic device with a rollable display according to claim 18, wherein the locking assembly comprises a support base, a stopper, and at least two springs, the support base has a slide rail, the stopper is located on the slide rail, the stopper is capable of moving in an extension direction of the slide rail, the springs are connected to the support base, a part of the springs extends into the slide rail, and the stopper is connected to the movable support rack.
